# EUROPEAN PATENT SPECIFICATION

(11) **EP 4 197 832 B1**
(45) Date of publication and mention of the grant of the patent: **09.10.2024**
(21) Application number: 22213081.7
(22) Date of filing: 13.12.2022
(51) Int. Cl.: B60H 1/00, B60H 1/14, B60H 1/32

(54) **ELECTRIC VEHICLE THERMAL MANAGEMENT LOOP, CONTROL METHOD, AND PURE ELECTRIC VEHICLE**
WÄRMEVERWALTUNGSSCHLEIFE FÜR ELEKTROFAHRZEUG, STEUERUNGSVERFAHREN UND REINES ELEKTROFAHRZEUG
BOUCLE DE GESTION THERMIQUE DE VÉHICULE ÉLECTRIQUE, PROCÉDÉ DE COMMANDE ET VÉHICULE ÉLECTRIQUE PUR

(30) Priority: 14.12.2021 CN 202111519837
(43) Date of publication of application: 21.06.2023
(73) Proprietor: Zhiji Automotive Technology Co., Ltd., Shanghai 201210 (CN)
(72) Inventor: Yan, Fulong, Shanghai 201210 (CN); Wang, Tianying, Shanghai 201210 (CN); Wu, Jun, Shanghai 201210 (CN); Liu, Jie, Shanghai 201210 (CN)
(74) Representative: dompatent von Kreisler Selting Werner - Partnerschaft von Patent- und Rechtsanwälten mbB

(56) References cited:
- EP-A1- 4 015 272
- WO-A1-2021/036957
- CN-A- 111 572 313
- US-A1- 2021 053 412

## Description

### FIELD OF INVENTION

The present invention belongs to a technical field of thermal management of a whole vehicle of a new energy vehicle, and especially to an electric vehicle thermal management loop, a control method, and a pure electric vehicle.

### BACKGROUND OF INVENTION

With economic development and social progress, energy conservation has become inevitable and a social consensus. New energy vehicles become a main development direction in an automotive industry. Current new energy vehicles are mainly pure electric and hydrogen fueled vehicles.

Pure electric vehicles are limited by current battery material characteristics and capacity bottleneck, endurance of pure electric vehicles cannot have equivalent endurance of traditional fuel vehicles, especially the endurance in low-temperature environment in winter, which is also a main concern of consumers over pure electric vehicles. Both a passenger compartment and a power battery need to be heated in a low-temperature environment in winter. A heating source is generally realized through PTC. However, electric heating efficiency of PTC is only about 0.95. Therefore, in the low-temperature environment, a level of the heating energy consumption of the pure electric vehicle directly affects the endurance of the whole vehicle. In the prior art, energy consumption of temperature control of power batteries is large, which affects vehicle endurance and fails to meet actual demands.

US 2021/0053412 A1 discloses a heat pump system for a vehicle, the system may include a cooling apparatus including a radiator, a first water pump, a first valve, and a reservoir tank which are connected through a coolant line, and configured to circulate a coolant in the coolant line to cool at least one electrical component provided in the coolant line; a battery cooling apparatus configured to include a battery coolant line connected to the reservoir tank through a second valve, and a second water pump and a battery module which are connected through the battery coolant line to circulate the coolant in the battery module; and a heating apparatus including a heating line connected to the coolant line through a third valve to heat a vehicle interior by use of a coolant and a third water pump provided on the heating line, and a heater.

### SUMMARY OF INVENTION

In view of the above-mentioned disadvantages of the prior art, an objective of the present invention is to provide a thermal management loop of an electric vehicle, a control method, and a pure electric vehicle, which use thermal coupling of heating pump, cooling loops of driving motor, and thermal management loops of a power battery to achieve efficient thermal management of a whole vehicle and reduce energy consumption of the whole vehicle.

In order to achieve the above objectives and other related objectives, the present invention provides a thermal management loop of an electric vehicle according to claim 1, comprising:
a driving motor cooling pipe system, comprising an expansion kettle, a first water pump, a driving motor, and a low-temperature radiator connected in sequence;
a power battery temperature control pipe system, comprising a second water pump, a battery cooler, and a power battery connected in sequence;
a first control pipe system, located between the driving motor cooling pipe system and the power battery temperature control pipe system, the first control pipe system configured to enable the driving motor cooling pipe system and the power battery temperature control pipe system to switch among the following three states:
   state 1: the driving motor cooling pipe system and the power battery temperature control pipe system forming independent closed loops respectively;
   state 2: the driving motor cooling pipe system and the power battery temperature control pipe system connected in series to a closed loop; and
   state 3, the expansion kettle, the first water pump, the driving motor, the second water pump, the battery cooler, and the power battery connected in series to a closed loop.

It further comprises a passenger compartment temperature control pipe system, which comprises an electric compressor, an outdoor heat exchanger, an evaporator, a gas-liquid separator, an in-vehicle condenser, and a heat exchange pipe, and
A second control pipe system, configured to enable the passenger compartment temperature control pipe system to switch between the following two states:
state a, the electric compressor, the outdoor heat exchanger, the evaporator, and the gas-liquid separator connected in series in sequence to form a closed loop, and the heat exchange pipe connected in parallel with the evaporator; and
state b, the electric compressor, the in-vehicle condenser, the outdoor heat exchanger, and the gas-liquid separator connected in series in sequence to form a closed loop, and the heat exchange pipe connected in parallel with the outdoor heat exchanger; and
the heat exchange pipe passing through the battery cooler to realize heat exchange with the power battery temperature control pipe system.

In an optional embodiment of the present invention, the first control pipe system is configured to enable the motor cooling pipe system and the power battery temperature control pipe system to be switched to state 4; and
the state 4 means that the expansion kettle, the first water pump, the driving motor, the second water pump, and the battery cooler are sequentially connected in series to a closed loop;
the first control pipe system comprises a six-way valve, and the six-way valve comprises:
   a first port, connected to the low-temperature radiator;
   a second port, connected to one end of a first branch pipe, and another end of the first branch pipe connected to a water outlet end of the driving motor;
   a third port, connected to the expansion kettle;
   a fourth port, connected to a water outlet end of the power battery;
   a fifth port, connected to one end of a second branch pipe, and another end of the second branch pipe connected to a pipe between the battery cooler and the power battery; and
   a sixth port, connected to the second water pump;
   station 1, the first port communicated with the third port, and the fourth port communicated with the sixth port;
   station 2, the first port communicated with the sixth port, and the fourth port communicated with the third port;
   station 3, the second port communicated with the sixth port, and the fourth port communicated with the third port; and
   station 4, the second port communicated with the sixth port, and the fifth port communicated with the third port.

In an optional embodiment of the present invention, the first control pipe system comprises a four-way valve, a first three-way valve, and a second three-way valve;
four ports of the four-way valve are respectively connected to the low-temperature radiator, the expansion kettle, the power battery, and the second water pump;
two ports of the first three-way valve are connected in series on the pipe between the driving motor and the low-temperature radiator, the third port is connected to one end of a third branch pipe, and another end of the third branch pipe is connected to a pipe between the low-temperature radiator and the four-way valve; and
two ports of the second three-way valve are connected in series on the pipe between the battery cooler and the power battery, the third port is connected to one end of a fourth branch pipe, and another end of the fourth branch pipe is connected to a pipe between the power battery and the four-way valve.

In an optional embodiment of the present invention, the second control pipe system comprises:
a main pipe system, connected to the electric compressor, the outdoor heat exchanger, the evaporator, and gas-liquid separator in sequence to form a closed loop;
a first sub-pipe system, connected in parallel with the outdoor heat exchanger, and the in-vehicle condenser connected to the first sub-pipe system;
a second sub-pipe system, connected in parallel with the evaporator, and the heat exchange pipe connected to the second sub-pipe system;
a third sub-pipe system, connected between the outdoor heat exchanger and the gas-liquid separator;
a first control valve assembly, used to control a liquid outlet end of the electric compressor to be connected to either the outdoor heat exchanger or the in-vehicle condenser; and
a second control valve assembly, used to control communication with or disconnection of the third sub-pipe system.

In an optional embodiment of the present invention, the first sub-pipe system is provided with a first electronic expansion valve, which is located at a liquid outlet end of the in-vehicle condenser;
the second sub-pipe system is provided with a second electronic expansion valve, which is located at a liquid inlet end of the heat exchange pipe;
a liquid inlet end of the evaporator is provided with a third electronic expansion valve;
the main pipe system is provided with a one-way valve, and the one-way valve is located on the main pipe system between the first sub-pipe system and the second sub-pipe system;
a pressure and temperature sensor is disposed on an outlet of the in-vehicle condenser and/or an outlet of the evaporator.

In an optional embodiment of the present invention, the power battery temperature control pipe system is provided with a first PTC heater, which is located between the second water pump and the battery cooler;
the evaporator and the in-vehicle condenser are both located in an air duct of a vehicle air conditioning system; and a second PTC heater is disposed in the air duct of the vehicle air conditioning system.

In order to achieve the above objectives and other related objectives, the present invention also provides a control method according to claim 7 for an electric vehicle thermal management loop, the electric vehicle thermal management loop comprises a driving motor cooling pipe system, a power battery temperature control pipe system, and a passenger compartment temperature control pipe system; the driving motor cooling pipe system comprises an expansion kettle, a first water pump, a driving motor, and a low-temperature radiator connected in sequence; the power battery temperature control pipe system comprises a second water pump, a first PTC heater, a battery cooler, and a power battery connected in sequence; the passenger compartment temperature control pipe system comprises an electric compressor, an outdoor heat exchanger, an evaporator, a gas-liquid separator, an in-vehicle condenser, a heat exchange pipe, and a second PTC heater; the heat exchange pipe passes through the battery cooler to realize heat exchange with the power battery temperature control pipe system; and
the control method comprises:
controlling the driving motor cooling pipe system and the power battery temperature control pipe system to form independent closed loops respectively, when both the passenger compartment and the power battery have cooling demands; controlling the electric compressor, the outdoor heat exchanger, the evaporator, and the gas-liquid separator to be connected in series in sequence to form a closed loop, and the heat exchange pipe connected in parallel with the evaporator; and controlling the first PTC heater to turn off;
controlling the driving motor cooling pipe system and the power battery temperature control pipe system integrally to form a closed loop in series, when the passenger compartment has a cooling demand, the power battery cooling demand is not high, and outlet water temperature of the driving motor loop is lower than power battery water temperature; controlling the electric compressor, the outdoor heat exchanger, the evaporator, and the gas-liquid separator to be connected in series in sequence to form a closed loop, and controlling the heat exchange pipe to be disconnected from the temperature control pipe system in the passenger compartment; and controlling the first PTC heater to turn off;
controlling the expansion kettle, the first water pump, the driving motor, the second water pump, the battery cooler, and the power battery to form a closed loop in series, when the power battery has a small load heating demand and the outlet water temperature of the driving motor is higher than that of the power motor loop; controlling the heat exchange pipe disconnected from the passenger compartment temperature control pipe system; and controlling the first PTC heater to turn off;
controlling the driving motor cooling pipe system and the power battery temperature control pipe system to form independent closed loops respectively, when both the passenger compartment and the power battery have heating demands; controlling the first PTC heater to turn on; controlling the electric compressor, the in-vehicle condenser, the outdoor heat exchanger, and the gas-liquid separator to be connected in series in sequence to form a closed loop; controlling the heat exchange pipe disconnected from the passenger compartment temperature control pipe system; and
controlling the expansion kettle, the first water pump, the driving motor, the second water pump, and the battery cooler to be connected in series in sequence to form a closed loop, when only the passenger compartment has heating demand; controlling the electric compressor, the in-vehicle condenser, the outdoor heat exchanger, and the gas-liquid separator to be connected in series in sequence to form a closed loop; and controlling the heat exchange pipe connected in parallel with the outdoor heat exchanger.

In order to achieve the above objectives and other related objectives, the present invention also provides a pure electric vehicle according to claim 8, comprising:
a passenger compartment;
a power system; and
a thermal management loop, the thermal management loop comprising:
   a first pipe system, comprising an expansion kettle, a first water pump, a driving motor, and a low-temperature radiator connected in series;
   a second pipe system, comprising a second water pump, a power battery, and a battery cooler connected in series;
   a first reversing module, connected between the first pipe system and the second pipe system, the first reversing module is configured to enable the first pipe system and the second pipe system to switch among the following four stations:
      station 1, the first pipe system and the second pipe system forming independent closed loops respectively;
      station 2, the expansion kettle, the first water pump, the driving motor, the low-temperature radiator, and the power battery connected in series to form a closed loop;
      station 3, the expansion kettle, the first water pump, the driving motor, and the power battery connected in series to form a closed loop;
      station 4, the expansion kettle, the first water pump, the driving motor, and the battery cooler connected in series to form a closed loop;
      wherein the battery cooler comprises a first flow channel and a second flow channel, the first flow channel and the second flow channel are independent of each other and are able to conduct heat exchange therebetween, the first flow channel is connected in series to the second pipe system, and the second flow channel is connected to a low-temperature pipe of a vehicle air conditioning system.

In an optional embodiment of the present invention, the electric vehicle thermal management loop also comprises a third pipe system, which comprises a third water pump, a PTC heater, and a heater core connected in series, the heater core is located in an air duct of a vehicle air conditioning system, and the heater core is connected in parallel with both ends of the power battery; the third pipe system is provided with a second reversing module, and the second reversing module is configured to enable the third pipe system to switch among following three stations:
station a, the third water pump, the PTC heater, and the heater core connected in series to form a closed loop;
station b, the third water pump, the PTC heater, and the power battery connected in series to form a closed loop;
station c, the third water pump, the PTC heater, and the heater core connected in series to form a closed loop, while the third water pump, the PTC heater, and power battery connected in series to form a closed loop.

In an optional embodiment of the present invention, the third pipe system is connected in series with a water-cooled condenser, the water-cooled condenser comprises a flow channel a and a flow channel b, the flow channel a and the flow channel b are independent from each other and are able to conduct heat exchange therebetween, the flow channel a is connected in series with the third-pipe system, and the flow channel b is connected to a high-temperature pipe of the vehicle air conditioning system;
the vehicle air conditioning system comprises an electric compressor, an outdoor heat exchanger, an evaporator, and a gas-liquid separator connected to each other; the vehicle air conditioning system also comprises a third reversing module, which is configured to enable the vehicle air conditioning system to switch between the following two stations:
station I, the electric compressor, the outdoor heat exchanger, the evaporator, and the gas-liquid separator connected in series to form a closed loop, and the second flow channel connected in parallel with the evaporator;
station II, the electric compressor, the flow channel b, the outdoor heat exchanger and the gas-liquid separator connected in series to form a closed loop, and the second flow channel connected in parallel with the outdoor heat exchanger; and
the evaporator located in the air duct of the vehicle air conditioning system.

According to the present invention, the first reversing module is configured to enable the first pipe system and the second pipe system to be switched to station 5, and the station 5 means that: the expansion kettle, the first water pump, and the driving motor form a closed loop separately; the second water pump and the power battery form a closed loop separately.

In an optional embodiment of the present invention, the electric compressor, the outdoor heat exchanger, the evaporator, and the gas-liquid separator are connected in series on a main pipe system, and the main pipe system is a closed loop; one end of the flow channel b is connected to one main pipe system between the electric compressor and the outdoor heat exchanger, and another end of the flow channel b is connected to the main pipe system between the outdoor heat exchanger and the evaporator; and both ends of the second flow channel are respectively connected to both ends of the evaporator;
the third reversing module comprises:
a first stop valve, located on the main pipe system between the electric compressor and the outdoor heat exchanger;
a second stop valve, located on the flow channel b;
a return branch pipe, one end of the return branch pipe connected to the main pipe system between the first stop valve and the outdoor heat exchanger, and another end connected to the gas-liquid separator; and
a third stop valve, located on the return branch pipe;

In an optional embodiment of the present invention, the vehicle air conditioning system also comprises a first electronic expansion valve located on a pipe leading from the flow channel b to the outdoor heat exchanger under the status of station II;
both ends of the first electronic expansion valve are connected in parallel with a first one-way valve;
a second one-way valve is connected in series on the return branch pipe;
a second electronic expansion valve is connected in series on the second flow channel;
the vehicle air conditioning system also comprises a third electronic expansion valve, and the third electronic expansion valve is located on a pipe leading from the outdoor heat exchanger to the evaporator under the status of station I.

In an optional embodiment of the present invention, the first reversing module comprises a six-way valve, a first branch pipe, and a second branch pipe;
one end of the first branch pipe is connected to the pipe between the driving motor and the low-temperature radiator, and another end is connected to the six-way valve;
one end of the second branch pipe is connected to the pipe between the power battery and the battery cooler, and another end is connected to the six-way valve;
the six-way valve has:
   a first port, connected to the battery cooler;
   a second port, connected to the second branch pipe;
   a third port, connected to the second water pump;
   a fourth port, connected to the expansion kettle;
   a fifth port, connected to the first branch pipe;
   a sixth port, connected to the low-temperature radiator;
   the six-way valve is configured as follows:
      the first port is able to be communicated with or disconnected from any one of the third port and the fourth port;
      the second port is able to be communicated with or disconnected from any one of the third port and the fourth port;
      the fifth port is able to be communicated with or disconnected from any one of the third port and the fourth port; and
      the sixth port is able to be communicated with or disconnected from any one of the third port and the fourth port.

Technical effects of the present invention are:
the present invention realizes series and parallel operations of the electric vehicle driving motor cooling loop and the power battery cooling loop, which not only enables the power battery to be cooled or heated separately, but also uses heat generated by the motor to heat the power battery, realizes energy recovery and utilization, and reduces vehicle energy consumption.

The present invention can bypass the power battery, thermally couple a water loop and a cooling loop, thereby transferring the heat generated by the motor to the passenger compartment, realizing auxiliary heating of the passenger compartment, and reducing energy consumption of the air conditioning system.

The present invention can realize reversing function of cooling and heating conditions of the outdoor heat exchanger through simple control, effectively reduce the energy consumption of the systems and improve battery endurance on a premise of meeting cooling and heating demands.

The present invention can use the cooling loop of the driving motor to cool the power battery, and can effectively reduce load of the air conditioning system when cooling demand of the power battery is not high.

The present invention can use the air conditioning system to cool the power battery, and can effectively improve cooling efficiency when the power battery cooling demand is high.

The present invention can use the PTC heater to heat the power battery, and can effectively improve the heating efficiency when the power battery has a high heating demand.

The present invention realizes the series and parallel operations of the driving motor cooling loop and the power battery cooling loop of the electric vehicle, the low-temperature radiator of the bypass driving motor loop, the bypass power battery, the thermal coupling of the water loop and the cooling loop, the bypass of the passenger compartment heat exchanger, the reversing of the cooling and heating conditions of the outdoor heat exchanger, the use of heat pumps for heating the power battery and other functions. While ensuring the temperature control efficiency, the present invention can reduce energy consumption of the systems and improve vehicle endurance.

### BRIEF DESCRIPTION OF DRAWINGS

FIG. 1 is a schematic diagram of an electric vehicle thermal management loop provided by an embodiment 1 of the present invention;
FIG. 2 is a schematic diagram of a passenger compartment temperature control pipe system provided by the embodiment 1 of the present invention, FIG. 2 is directly transformed from the passenger compartment temperature control pipe system in FIG. 1, and its connection relationship is exactly the same as that of the passenger compartment temperature control pipe system in FIG. 1;
FIG. 3 is a schematic diagram of an electric vehicle thermal management loop provided by an embodiment 2 of the present invention;
FIG. 4 is a schematic diagram of an electric vehicle thermal management loop provided by an embodiment 3 of the present invention;
FIG. 5 is a schematic diagram of the electric vehicle thermal management loop provided by an embodiment of the present invention;
FIG. 6 is a schematic diagram of a first pipe system provided by an embodiment of the present invention;
FIG. 7 is a schematic diagram of a second pipe system provided by an embodiment of the present invention;
FIG. 8 is a schematic diagram of a third pipe system provided by an embodiment of the present invention;
FIG. 9 is a schematic diagram of a vehicle air conditioning system provided by an embodiment of the present invention;
FIG. 10 is a schematic diagram of a transformation state of the vehicle air conditioning system provided by an embodiment of the present invention, and connection relationships of components in the present diagram are completely consistent with FIG 9.

### DETAILED DESCRIPTION OF PREFERRED EMBODIMENTS

The implementation modes of the present invention are described below through specific embodiments, and those skilled in the art can easily understand other advantages and effects of the present invention from contents disclosed in the description. It should be noted that the following embodiments and the features in the embodiments can be combined with each other without conflict.

It should be noted that the diagrams provided in the following embodiments only illustrates the basic concept of the present invention in a schematic way, so the diagram only shows the components related to the present invention rather than number, shape, and size of components in actual implementation. Type, number, and proportion of each component may vary arbitrarily in its actual implementation, and the layout of the components may be more complex.

### Embodiment 1

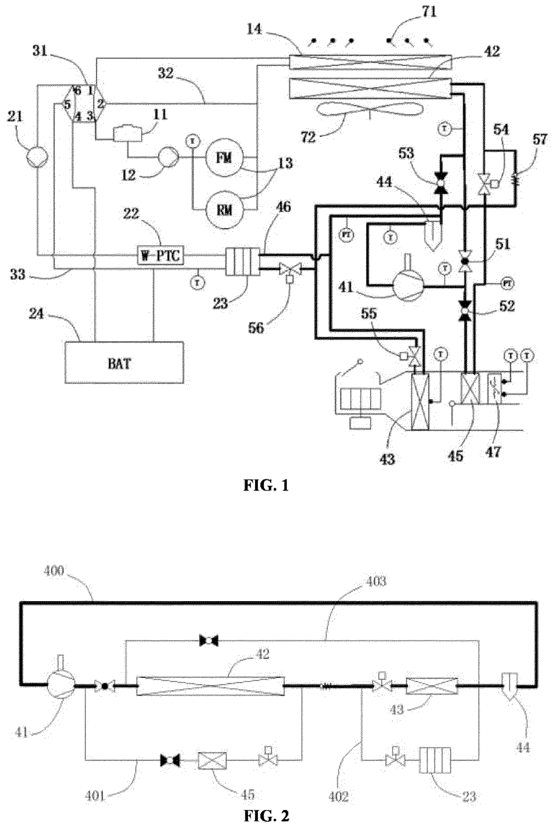

As shown in FIG. 1, an electric vehicle thermal management loop comprises a driving motor cooling pipe system, a power battery temperature control pipe system, a passenger compartment temperature control pipe system, a first control pipe system, and a second control pipe system.

For details, please refer to FIG. 1, the driving motor cooling pipe system comprises an expansion kettle 11, a first water pump 12, a driving motor 13, and a low-temperature radiator 14 connected in sequence. It can be understood that the driving motor 13 in the present invention refers to a cooling water channel of the driving motor 13, not the power structure of the driving motor 13 itself. The power battery temperature control pipe system comprises a second water pump 21, a first PTC heater 22, a battery cooler 23, and a power battery 24 connected in sequence. It can be understood that the power battery 24 of the present invention refers to a cooling channel of the power battery 24, not the electrochemical structure of the power battery 24 itself. The passenger compartment temperature control pipe system comprises an electric compressor 41, an outdoor heat exchanger 42, an evaporator 43, a gas-liquid separator 44, an in-vehicle condenser 45, a heat exchange pipe 46, and a second PTC heater 47. The heat exchange pipe 46 passes through the battery cooler 23 to realize heat exchange with the power battery temperature control pipe system. The evaporator 43, the in-vehicle condenser 45, and the second PTC heater 47 are all located in the air duct of the vehicle air conditioning system. The low-temperature radiator 14 and the outdoor heat exchanger 42 are both located behind a grille 71 on a front face of the vehicle, and the low-temperature radiator 14 is located in front of the outdoor heat exchanger 42, and a cooling fan 72 is disposed a rear side of the outdoor heat exchanger 42.

For details, please refer to FIG. 1, the first control pipe system is located between the driving motor cooling pipe system and the power battery temperature control pipe system. The first control pipe system is configured to enable the driving motor cooling pipe system and the power battery temperature control pipe system to switch among following four states:
state 1, the driving motor cooling pipe system and the power battery temperature control pipe system forming independent closed loops respectively;
state 2, the driving motor cooling pipe system and the power battery temperature control pipe system connected in series to a closed loop;
state 3, the expansion kettle 11, the first water pump 12, the driving motor 13, the second water pump 21, the battery cooler 23, and the power battery 24 connected in series to a closed loop;
state 4, the expansion kettle 11, the first water pump 12, the driving motor 13, the second water pump 21, and the battery cooler 23 connected in series in sequence to form a closed loop.

It can be understood, in a specific embodiment of the present invention, the above four states can be selectively set, for example, only state 1, state 2, and state 3 can be set.

As shown in FIG. 1, as a preferred embodiment of the present invention, the first control pipe system comprises a six-way valve 31, which comprises:
a first port 1, connected to the low-temperature radiator 14;
a second port 2, connected to one end of a first branch pipe 32, and another end of the first branch pipe 32 connected to a water outlet end of the driving motor 13;
a third port 3, connected to the expansion kettle 11;
a fourth port 4, connected to a water outlet end of the power battery 24;
a fifth port 5, connected to one end of the second branch pipe 33, and another end of the second branch pipe 33 connected to a pipe between the battery cooler 23 and the power battery 24;
a sixth port 6, connected to the second water pump 21.

The six-way valve 31 is configured to be able to switch among at least following four working stations:
station 1, the first port 1 communicated with the third port 3, and the fourth port 4 communicated with the sixth port 6;
station 2, the first port 1 communicated with the sixth port 6, and the fourth port 4 communicated with the third port 3;
station 3, the second port 2 communicated with the sixth port 6, and the fourth port 4 communicated with the third port 3;
station 4, the second port 2 communicated with the sixth port 6, and the fifth port 5 communicated with the third port 3.

It can be understood that the station 1, the station 2, the station 3, and the station 4 of the six-way valve 31 respectively realize the state 1, the state 2, the state 3, and the state 4.

As shown in FIG. 1 and FIG. 2, the second control pipe system is configured to enable the passenger compartment temperature control pipe system to switch between the following two states:
state a, the electric compressor 41, the outdoor heat exchanger 42, the evaporator 43, and the gas-liquid separator 44 connected in series in sequence to form a closed loop, and the heat exchange pipe 46 connected in parallel with the evaporator 43; and
state b, the electric compressor 41, the in-vehicle condenser 45, the outdoor heat exchanger 42, and the gas-liquid separator 44 connected in series in sequence to form a closed loop, and the heat exchange pipe 46 connected in parallel with the outdoor heat exchanger 42.

Refer to FIG. 2, specifically, the second control pipe system comprises:
a main pipe system 400, connected with the electric compressor 41, the outdoor heat exchanger 42, the evaporator 43, and the gas-liquid separator 44 in sequence to form a closed loop;
a first sub-pipe system 401, connected in parallel with the outdoor heat exchanger 42, and the in-vehicle condenser 45 connected to the first sub-pipe system 401;
a second sub-pipe system 402 connected in parallel with the evaporator 43, and the heat exchange pipe 46 connected to the second sub-pipe system 402;
a third sub-pipe system 403 connected between the outdoor heat exchanger 42 and the gas-liquid separator 44;
a first control valve assembly, used to control a liquid outlet end of the electric compressor 41 to be connected to either the outdoor heat exchanger 42 or the in-vehicle condenser 45;
a second control valve assembly, used to control communication with or disconnection of the third sub-pipe system 403.

As shown in FIG. 2, it can be understood, when the first sub-pipe system 401 and the third sub-pipe system 403 are disconnected, the passenger compartment temperature control pipe system is in a refrigeration state. When the first sub-pipe system 401 is communicated with the third sub-pipe system 403, the passenger compartment temperature control pipe system is in a heating state. The communication with or disconnection of the second sub-pipe system 402 is related to heat exchange between the passenger compartment temperature control pipe system and the power battery temperature control pipe system. When the second sub-pipe system 402 is disconnected, there is no heat exchange between the passenger compartment temperature control pipe system and the power battery temperature control pipe system, while when the second sub-pipe system 402 is communicated, there is heat exchange between the passenger compartment temperature control pipe system and the power battery temperature control pipe system. Effects of the heat exchange are mainly in two aspects. On one hand, the power battery 24 is cooled simultaneously during a cooling process of the passenger compartment temperature control pipe system; and on the other hand, the power battery temperature control pipe system absorbs heat generated by the motor during a heating process of the passenger compartment temperature control pipe system, thereby improving the heating effect of the passenger compartment temperature control pipe system, realizing energy recovery and reducing heating energy consumption.

As shown in FIG. 2, as a preferred embodiment of the present invention, the first control valve assembly comprises:
a first two-way solenoid valve 51, located on the main pipe 400 between an electric compressor 41 and the outdoor heat exchanger 42, and located at downstream of a connection node between a front end of the first sub-pipe system 401 and the main pipe system 400;
a second two-way solenoid valve 52, located on the first sub-pipe system 401.

It can be understood that the two-way solenoid valves of the present invention are stop valves, the stop valve has two stations of conduction and disconnection.

Please refer to FIG. 1 and FIG. 2, as a preferred embodiment of the present invention, the second control valve assembly comprises a third two-way solenoid valve 53 disposed on the third sub-pipe system 403.

Refer to FIG. 1 and FIG. 2, further, a first electronic expansion valve 54 is disposed on the first sub-pipe system 401, and the first electronic expansion valve 54 is located at an outlet end of the in-vehicle condenser 45.

Refer to FIG. 1 and FIG. 2, a second electronic expansion valve 56 is disposed on the second sub-pipe system 402, and the second electronic expansion valve 56 is located at an inlet end of the heat exchange pipe 46.

Refer to FIG. 1 and FIG. 2, a third electronic expansion valve 55 is disposed at an inlet end of the evaporator 43.

It can be understood that the present invention can realize independent control of the in-vehicle condenser 45, the evaporator 43, and heat exchange pipe 46 through the above electronic expansion valves, so as to finely control the pipe systems according to actual temperature control demands.

As shown in FIG. 1 and FIG. 2, the main pipe system 400 is provided with a one-way valve 57, which is located on the main pipe system 400 between the first sub-pipe system 401 and the second sub-pipe system 402.

As shown in FIG. 1, the following positions are provided with temperature sensors: an outlet of the electric compressor 41, a surface of the outdoor heat exchanger 42, a suction port of the electric compressor 41, a surface of the evaporator 43, an inlet of the driving motor 13, and an inlet of the power battery 24.

As shown in FIG. 1, an outlet of the in-vehicle condenser 45 and an outlet of the evaporator 43 are provided with pressure sensors and temperature sensors.

It can be understood that the above temperature sensors and pressure temperature sensors can be connected to a trip computer or an independent controller, so as to adjust operation status of the pipe systems in real time according to ambient temperature and pipe operation parameters.

Based on the above electric vehicle thermal management loop, the present invention also provides a control method of the electric vehicle thermal management loop, comprises:
controlling the driving motor cooling pipe system and the power battery temperature control pipe system to form independent closed loops respectively, when both the passenger compartment and the power battery 24 have cooling requirements; controlling the electric compressor 41, the outdoor heat exchanger 42, the evaporator 43, and the gas-liquid separator 44 to be connected in series in sequence to form a closed loop, and the heat exchange pipe 46 is connected in parallel with the evaporator 43; controlling the first PTC heater 22 to close; this working condition is often used in hot summer environment, for example, when the ambient temperature is greater than 30 ° C.

Controlling the driving motor cooling pipe system and the power battery temperature control pipe system in series to a closed loop; controlling the electric compressor 41, the outdoor heat exchanger 42, the evaporator 43, and the gas-liquid separator 44 to be connected in series in order to form a closed loop, and controlling the heat exchange pipe 46 to be disconnected from the passenger compartment temperature control pipe system; controlling the first PTC heater 22 to close; when the passenger compartment has a cooling demand, but the power battery 24 has a low cooling demand, and outlet water temperature of the loop of the driving motor 13 is lower than that of the power battery 24; this working condition is usually used in slightly hot environment in spring and autumn, for example, when the ambient temperature is in a range 20°C -30°C .

Controlling the expansion kettle 11, the first water pump 12, the drive motor 13, the second water pump 21, the battery cooler 23, and the power battery 24 to form a closed loop in series; controlling disconnection of the heat exchange pipe 46 from the passenger compartment temperature control pipe system; controlling the first PTC heater 22 to close; when the power battery 24 has a small load heating demand and outlet water temperature of the driving motor 13 is higher than the power motor loop; this working condition is often used in the slightly cold environment in spring and autumn, for example, when the ambient temperature is in a range of 10 °C -20°C.

Controlling the cooling pipe system of the driving motor and the temperature control pipe system of the power battery to form independent closed loops respectively; controlling opening of the first PTC heater 22; controlling the electric compressor 41, the vehicle condenser 45, the outdoor heat exchanger 42, and the gas-liquid separator 44 in series in sequence to form a closed loop; controlling disconnection of the heat exchange pipe 46 from the passenger compartment temperature control pipe system, when both the passenger compartment and the power battery 24 have heating demands; this working condition is often used in cold winter environment, for example, when the ambient temperature is in a range of -30 ° C to 0 ° C.

Controlling the expansion kettle 11, the first water pump 12, the driving motor 13, the second water pump 21, and the battery cooler 23 to form a closed loop in series; controlling the electric compressor 41, the in-vehicle condenser 45, the outdoor heat exchanger 42, and the gas-liquid separator 44 in series in sequence to form a closed loop; the heat exchange tube 46 is controlled to be connected in parallel with the outdoor heat exchanger 42, when only the passenger compartment needs heating.

When the ambient temperature is extremely low, such as below -20°C, the present invention can improve heating efficiency of the power battery 24 and the passenger compartment through a first PTC heater 22 and a second PTC heater 47.

### Embodiment 2

A difference between the present embodiment and the embodiment 1 is that only specific embodiments of the first control pipe system and the first control valve assembly are different.

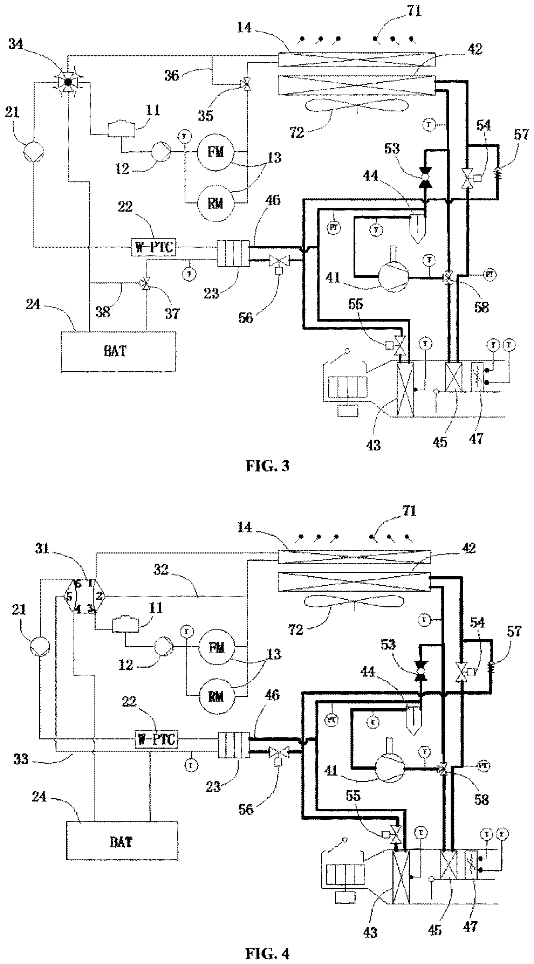

As shown in FIG. 3, in the present embodiment, the first control pipe system comprises a four-way valve 34, a first three-way valve 35, and a second three-way valve 37;
four ports of the four-way valve 34 are respectively connected to the low-temperature radiator 14, the expansion kettle 11, the power battery 24, and the second water pump 21;
two ports of the first three-way valve 35 are connected in series on the pipe between the driving motor 13 and the low-temperature radiator 14, the third port is connected to one end of a third branch pipe 36, and another end of the third branch pipe 36 is connected to the pipe between the low-temperature radiator 14 and the four-way valve 34;
two ports of the second three-way valve 37 are connected in series on the pipe between the battery cooler 23 and the power battery 24, the third port is connected to one end of the fourth branch pipe 28, and another end of the fourth branch pipe 28 is connected to the pipe between the power battery 24 and the four-way valve 34.

As shown in FIG. 3, the first control valve assembly comprises a third three-way valve 58, which is located at a connection node between a front end of the first sub-pipe 401 and the main pipe 400.

### Embodiment 3

A difference between the present embodiment and embodiment 1 is that only the specific implementation methods of the first control valve assembly are different.

As shown in FIG. 4, in the present embodiment, the first control valve assembly comprises a third three-way valve 58, which is located at a connection node between a front end of the first sub pipe system 401 and the main pipe system 400.

The present invention realizes a series parallel operation of the cooling loop of the driving motor 13 and the cooling loop of the power battery 24 of the electric vehicle, the low-temperature radiator 14 of the loop of the bypass driving motor 13, the bypass power battery 24, the thermal coupling of the water loop and the refrigerant loop, the bypass of the heat exchanger in the passenger compartment, the reversing of the cooling and heating conditions of the outdoor heat exchanger 42, and effectively reduces energy consumption of the system and improves battery life on a premise of meeting cooling and heating demands .

### Embodiment 4

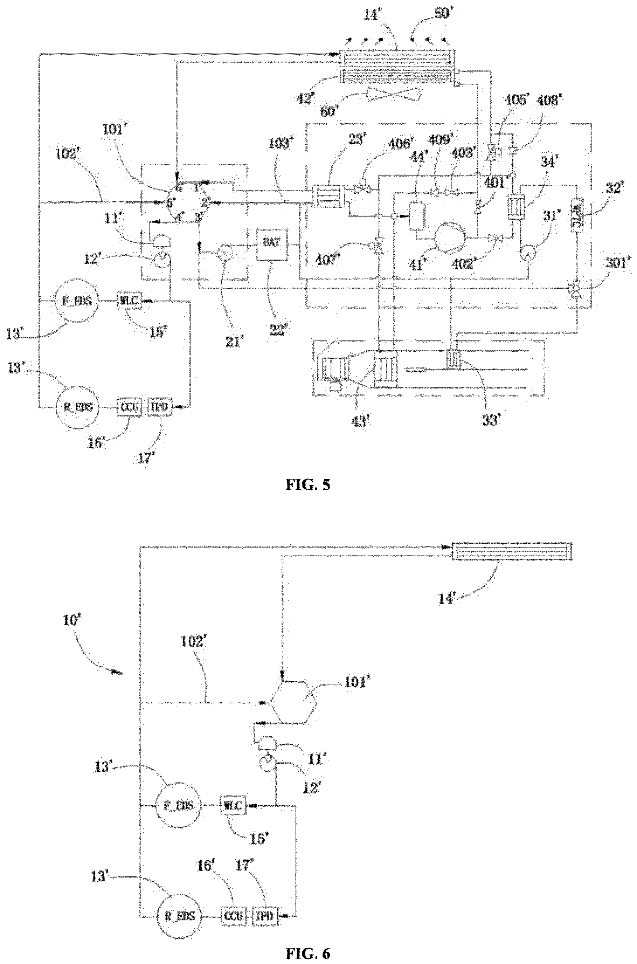

As shown in FIG. 5, an electric vehicle thermal management loop comprises a first pipe system 10', a second pipe system 20', and a first reversing module.

As shown in FIG. 5 and FIG. 6, the first pipe system 10' comprises an expansion kettle 11', a first water pump 12', a driving motor 13', and a low-temperature radiator 14' which are connected in series.

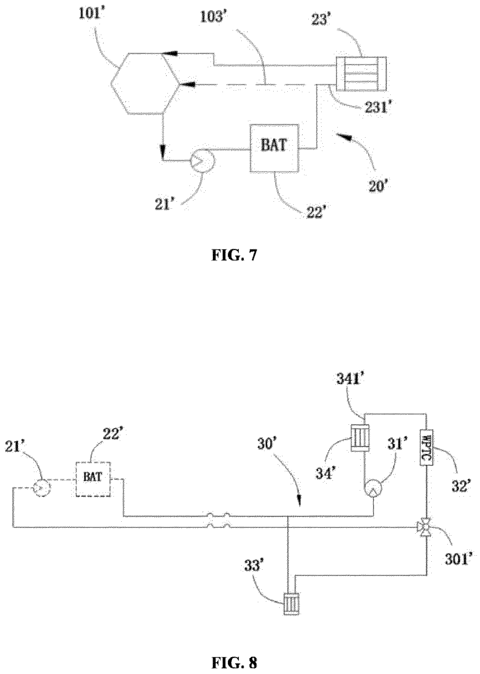

As shown in FIG. 5 and FIG. 7, the second pipe system 20' comprises a second water pump 21', a power battery 22', and a battery cooler 23' connected in series.

As shown in FIG. 5, FIG. 6 and FIG. 7, the first reversing module is connected between the first pipe system 10' and the second pipe system 20'. The first reversing module is configured to enable the first pipe system 10' and the second pipe system 20' to switch among the following four stations:
station 1, the first pipe system 10' and the second pipe system 20' forming independent closed loops respectively;
station 2, the expansion kettle 11', the first water pump 12', the driving motor 13', the low-temperature radiator 14', and the power battery 22' connected in series to form a closed loop;
station 3, the expansion kettle 11', the first water pump 12', the driving motor 13', and the power battery 22' connected in series to form a closed loop;
station 4, the expansion kettle 11', the first water pump 12', the driving motor 13', and the battery cooler 23' connected in series to form a closed loop.

As shown in FIG. 5, FIG. 7, and FIG. 9, the battery cooler 23' comprises a first flow channel 231' and a second flow channel 232'. The first flow channel 231' and the second flow channel 232' are independent with each other and can conduct heat exchange therebetween. The first flow channel 231' is connected in series to the second pipe system 20', and the second flow channel 232' is connected to the low-temperature pipe of the vehicle air conditioning system.

It can be understood that in the expression of the present invention, the driving motor 13' refers to the cooling water loop of the driving motor 13', not the power structure of the driving motor 13' itself. Similarly, the power battery 22' refers to the cooling water loop of the power battery 22', not the electrochemical structure of the power battery 22'.

The present invention can selectively connect the power battery 22' to the air conditioning system or the driving motor 13'. When connected to the air conditioning system, the battery is cooled. When connected to the driving motor 13', on one hand, cooling liquid of the driving motor 13' can be used to cool the battery; on the other hand, residual heat of the driving motor 13' can be used to heat the battery and reduce system energy consumption. In addition, the present invention can directly conduct heat exchange between the cooling liquid of the driving motor 13' and the air conditioning system, and can absorb residual heat of the driving motor 13' when the air conditioning system is in heating, thereby reducing the system energy consumption while ensuring the heating effect.

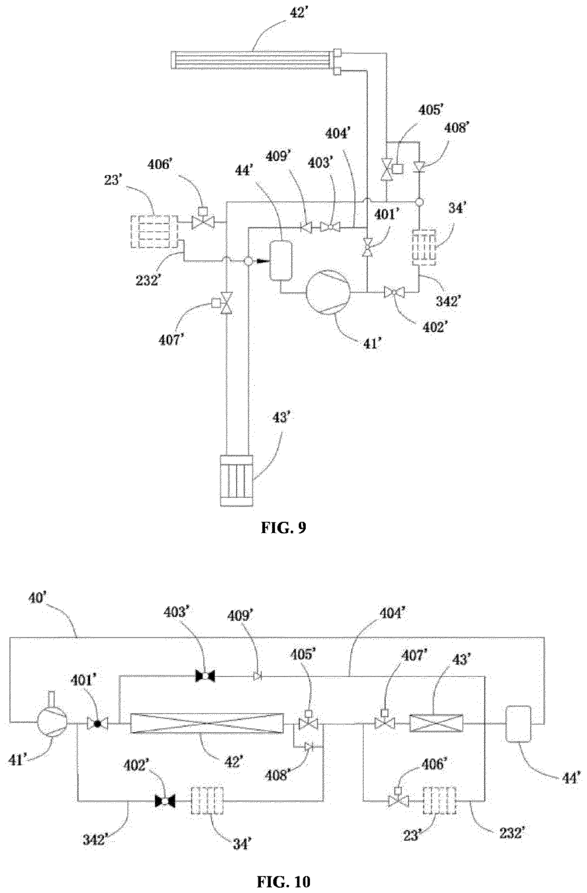

As shown in FIG. 5 and FIG. 9, it also comprises a third pipe system 30'. The third pipe system 30' comprises a third water pump 31', a PTC heater 32', and a heating core 33' connected in series. The heating core 33' is located in an air duct of the vehicle air conditioning system, and the heating core 33' is connected in parallel to both ends of the power battery 22'; the third pipe 30' is provided with a second reversing module, and the second reversing module is configured to enable the third pipe system 30' to switch among following three stations:
station a, the third water pump 31', the PTC heater 32', and heater core 33' connected in series to a closed loop;
station b, the third water pump 31', the PTC heater 32', and the power battery 22' connected in series to a closed loop;
station c, the third water pump 31', the PTC heater 32', and the heater core 33' connected in series to form a closed loop, while the third water pump 31', the PTC heater 32' and the power battery 22' connected in series to form a closed loop.

As shown in FIG. 1 and FIG. 4, the second reversing module in the present invention can be a three-way proportional valve 301', for example. It can be foreseen that the present invention can also use two stop valves to replace the three-way proportional valve 301'.

When the ambient temperature is low, such as lower than -20°C, the present invention can also auxiliarily heat the power battery 22' and the passenger compartment through the PTC heater 32', so as to ensure that the power battery 22' works at a suitable temperature and improve electric energy conversion rate.

As shown in FIG. 5, FIG. 9, and FIG. 10, the third pipe system 30' is connected in series with a water-cooled condenser 34'. The water-cooled condenser 34' comprises a flow channel a341' and a flow channel b342'. The flow channel a341' and the flow channel b342' are independent with each other and can conduct heat exchange therebetween. The flow channel a341' is connected in series with the third pipe system 30', and the flow channel b 342' is connected to high-temperature pipe of the vehicle air conditioning system. The present invention can realize the heat exchange between the third pipe system 30' and the air conditioning system. When heating demand of the passenger compartment is small, the air conditioning system can be used to heat the passenger compartment. At the same time, the air conditioning system can recover residual heat of the driving motor 13', which reduces the system energy consumption while ensuring heating effect of the passenger compartment.

As shown in FIG. 9 and FIG. 10, the vehicle air conditioning system comprises an electric compressor 41', an outdoor heat exchanger 42', an evaporator 43', and a gas-liquid separator 44' connected to each other; it also comprises a third reversing module, which is configured to enable the vehicle air conditioning system to switch between the following two stations:
station I, the electric compressor 41', the outdoor heat exchanger 42', the evaporator 43', and the gas-liquid separator 44' connected in series to form a closed loop, and the second flow channel 232' connected in parallel with the evaporator 43';
station II, the electric compressor 41', the flow channel b342', the outdoor heat exchanger 42', and the gas-liquid separator 44' connected in series to form a closed loop, and the second flow channel 232' connected in parallel with the outdoor heat exchanger 42';
the evaporator 43' is located in air duct of the vehicle air conditioning system.

It can be understood that the above station I corresponds to the cooling state of the air conditioner, while the above station II corresponds to the heating state of the air conditioner.

As shown in FIG. 1, FIG. 2, and FIG. 3, the first reversing module is configured to enable the first pipe system 10' and the second pipe system 20' to be switched to station 5, the station 5 is: the expansion kettle 11', the first water pump 12', and the driving motor 13' form a closed loop independently; the second water pump 21' and the power battery 22' form a closed loop independently. It can be understood that when the power battery 22' has no heating and cooling demands and the ambient temperature is slightly low, the first reversing module can be adjusted to the station 5. At this status, the first pipe system 10' can conduct cyclic heat storage. When the air conditioning system needs heating, the first reversing module can be switched to the station 4, so as to transfer the heat in the first pipe system 10' to the air conditioning system, further improving residual heat utilization rate of the driving motor 13', and reducing the system energy consumption.

As shown in FIG. 9 and FIG. 10, the electric compressor 41', the outdoor heat exchanger 42', the evaporator 43' and the gas-liquid separator 44' are connected in series on a main pipe system 40', and the main pipe system 40' is a closed loop. One end of the flow channel b342' is connected with the main pipe system 40' between the electric compressor 41' and the outdoor heat exchanger 42', and another end of the flow channel b342' is connected to the main pipe system 40' between the outdoor heat exchanger 42' and the evaporator 43'. Both ends of the second flow channel 232' are respectively connected to both ends of the evaporator 43'. It can be understood that when the vehicle is charged, the power battery 22' has a heating demand while the passenger compartment has no heating demand. At this status, the power battery 22' can be communicated with the third pipe system 30', and the heating core 33' can be disconnected from the third pipe system 30'. The third pipe system 30' can be heated either by the air conditioning system or the PTC heater 32' for heating.

As shown in FIG. 9 and FIG. 10, the third reversing module comprises a first stop valve 401', a second stop valve 402', a return branch pipe 404', and a third stop valve 403'.

As shown in FIG. 10, the first stop valve 401' is located on the main pipe system 40' between the electric compressor 41' and the outdoor heat exchanger 42';
as shown in FIG. 10, the second stop valve 402' is located on the flow channel b342';
as shown in FIG. 10, one end of the return branch pipe 404' is connected to the main pipe system 40' between the first stop valve 401' and the outdoor heat exchanger 42', and another end is connected to the gas-liquid separator 44';
as shown in FIG. 10, the third stop valve 403' is located on the return branch pipe 404'.

Please refer to FIG. 9 and FIG. 10, the vehicle air conditioning system further comprises a first electronic expansion valve 405', and the first electronic expansion valve 405' is located on a pipe leading from the flow channel b to the outdoor heat exchanger 42' in the station II. Both ends of the first electronic expansion valve 405' are connected in parallel with the first one-way valve 408'. A second one-way valve 409' is connected in series on the return branch pipe 404'. A second electronic expansion valve 406' is connected in series on the second flow channel 232'. The vehicle air conditioning system further comprises a third electronic expansion valve 407', and the third electronic expansion valve 407' is located on a pipe leading from the outdoor heat exchanger 42' to the evaporator 43' under the status of station I.

Please refer to FIG. 5, FIG. 6, and FIG. 7, as a preferred embodiment of the present invention, the first reversing module comprises a six-way valve 101', a first branch pipe 102', and a second branch pipe 103'; one end of the first branch pipe 102' is connected to the pipe between the driving motor 13' and the low-temperature radiator 14', and another end is connected to the six-way valve 101'; one end of the second branch pipe 103' is connected to the pipe between the power battery 22' and the battery cooler 23', and another end is connected to the six-way valve 101'.

Please refer to FIG. 5, the six-way valve 101' has a first port 1', a second port 2', a third port 3', a fourth port 4', a fifth port 5', and a sixth port 6'.

The first port 1' is connected to the battery cooler 23'; the second port 2' is connected to the second branch pipe 103'; the third port 3' is connected to the second water pump 21'; the fourth port 4' is connected to the expansion kettle 11'; the fifth port 5' is connected to the first branch pipe 102'; and the sixth port 6' is connected to the low-temperature radiator 14'.

The six-way valve 101' is configured as follows: the first port 1' is able to be communicated with or disconnected from any one of the third port 3' and the fourth port 4'; the second port 2' is able to be communicated with or disconnected from any one of the third port 3' and the fourth port 4'; the fifth port 5' is able to be communicated with or disconnected from any one of the third port 3' and the fourth port 4'; and the sixth port 6' is able to be communicated with or disconnected from any one of the third port 3' and the fourth port 4'.

It can be understood that in addition to the six-way valve 101', the present invention can also use a combination of multiple stop valves to achieve the above-mentioned control process.

Please refer to FIG. 5, the low-temperature radiator 14' and the outdoor heat exchanger 42' are located behind a grille 50' on a front face of the vehicle, and a cooling fan 60' is disposed behind the low-temperature radiator 14' and/or outdoor heat exchanger 42'.

Please refer to FIG. 5 and FIG. 6, the first pipe system 10' also passes through a wireless charging module 15', an intelligent driving module 16', and a vehicle charger 17' to cool these components.

Based on the thermal management loop, the present invention further provides a pure electric vehicle, which comprises: a passenger compartment; a power system; and a thermal management loop, and the thermal management loop comprises a first pipe system 10', a second pipe system 20', and a first reversing module.

The first pipe system 10' comprises an expansion kettle 11', a first water pump 12', a driving motor 13', and a low-temperature radiator 14' connected in series; the second pipe system 20' comprises a second water pump 21', a power battery 22', and a battery cooler 23' connected in series; and the first reversing module is connected between the first pipe system 10' and the second pipe system 20', and the first reversing module is configured to enable the first pipe system 10' and the second pipe system 20' to switch among the following four stations:
station 1, the first pipe system 10' and the second pipe system 20' forming independent closed loop respectively;
station 2, the expansion kettle 11', the first water pump 12', the driving motor 13', the low-temperature radiator 14', and the power battery 22' connected in series to form a closed loop;
station 3, the expansion kettle 11', the first water pump 12', the driving motor 13', and the power battery 22' connected in series to form a closed loop;
station 4, the expansion kettle 11', the first water pump 12', the driving motor 13', and the battery cooler 23' connected in series to form a closed loop;
wherein the battery cooler 23' comprises a first flow channel 231' and a second flow channel 232', the first flow channel 231' and the second flow channel 232' are independent of each other and can conduct heat exchange therebetween, the first flow channel 231' is connected in series to the second pipe system 20', and the second flow channel 232' is connected to a low-temperature pipe of the vehicle air conditioning system.

Based on the thermal management loop, the present invention also provides a control method of an electric vehicle thermal management loop, specifically:
under a high temperature working condition in summer, for example, when the ambient temperature is greater than 30 ° C, both the passenger compartment and the power battery 22' have cooling demands, the electric compressor 41', the cooling fan 60', and an active grid are all turned on, a refrigerant in high temperature and high pressure state enters the outdoor heat exchanger 42' through the first stop valve 401' and becomes liquid after cooling; it reaches the second electronic expansion valve 406' and the third electronic expansion valve 407' respectively through the first one-way valve 408'; the refrigerant throttled by the second electronic expansion valve 406' enters the battery cooler 23' to cool a power battery 22' loop; the refrigerant throttled by the third electronic expansion valve 407' enters the evaporator 43' to cool the passenger compartment. Under this working condition, since the second stop valve 402' is turned off, the refrigerant will not enter the water-cooled condenser 34' and the third water pump 31' will not work, which can reduce heat load of cooling in the vehicle; under this working condition, the six-way valve 101' on a water way side is in an initial state, the second water pump 21' drives coolant to enter the power battery 22', and then enters the battery cooler 23' for cooling; the cooled coolant returns to the second water pump 21' through the first port 1 and the third port 3 of the six-way valve 101' to cool the battery's internal battery cell. Under this working condition, the coolant of the loop of the driving motor 13' comes out of the first water pump 12' and is divided into two paths to front and rear driving motors 13' and other components requiring liquid cooling, and then combined into one path to enter the low-temperature radiator 14'; the high temperature coolant is cooled in the low-temperature radiator 14' and then returns to the expansion kettle 11' through the sixth port 6' and the fourth port 4' of the six-way valve 101', and then enters the first water pump 12' again.

When ambient temperature is relatively high in spring and autumn working conditions, for example, when the ambient temperature is in the range of 20°C- 30°C, when the passenger compartment has cooling demand, the second electronic expansion valve 406' is turned off, and a working mode of other refrigerant loop components is the same as that in the summer working condition. When the cooling demand of the power battery 22' is not high and an outlet water temperature of the loop of the driving motor 13' is lower than that of the power battery 22', a working mode of the six-way valve 101' is that, the sixth port 6' is communicated with the third port 3', the second port 2' is communicated with the fourth port 4', the driving motor 13' and the loop of the power battery 22' operate in series, and the power battery 22' dissipates heat through the low-temperature radiator 14'. When the cooling demand of the power battery 22' is high, the parallel operation mode at the waterway side is the same as that in the summer cooling working condition. When the ambient temperature under spring and autumn working conditions is relatively low, for example, when the ambient temperature is in the range of 10°C- 20°C, when the power battery 22' has a small load heating demand and the outlet water temperature of the driving motor 13' is higher than that of the power motor loop, the working mode of the six-way valve 101' is that, the fifth port 5' is communicated with the third port 3', the second port 2' is communicated with the fourth port 4', bypass the low-temperature radiator 14'; and the coolant enters the second water pump 21' through the fifth port 5' and the third port 3' of the six-way valve 101' after coming out of the front and rear driving motors 13', and then enters into the power battery 22'. After coming out of the power battery 22', the coolant enters the expansion kettle 11' through the second port 2' and the fourth port 4' of the six-way valve 101', and then returns to the first water pump 12' again.

Under low-temperature working conditions in winter, for example, when the ambient temperature is in the range of -30°C- 0°C, when both the passenger compartment and the power battery 22' have heating demands, the electric compressor 41', the cooling fan 60', and the active grid are all turned on. The refrigerant in high temperature and high pressure state enters the water-cooled condenser 34' through the second stop valve 402' to heat the coolant in a heating loop. The coolant, coming out of the water-cooled condenser 34', is compensated and heated by the PTC heater 32', and is divided into two paths through the three-way proportional valve 301', and two-way flow is adjusted proportionally according to the heating demands of the passenger compartment and the power battery 22'. The high temperature coolant of the loop to the passenger compartment will heat air in the passenger compartment through the heater core 33', and then returns to the water-cooled condenser 34' through the third water pump 31'. The high temperature coolant of the loop to the power battery 22' enters the power battery 22' through the second water pump 21' to heat the battery, and returns to the third water pump 31' and then to the water-cooled condenser 34' again. Refrigerant at the refrigerant side comes out of the water-cooled condenser 34', and then is throttled by the first electronic expansion valve 405', and enters the outdoor heat exchanger 42' to absorb external environment heat, then enters the gas-liquid separator 44' through the third stop valve 403' and the second one-way valve 409', and returns to the electric compressor 41'. The fifth port 5' of the six-way valve 101' is connected to the fourth port 4' of the six-way valve 101', the second port 2' is connected to the third port 3', and the loop of the driving motor 13' bypasses the low-temperature radiator 14' for independent operation to store heat.

For heating in the passenger compartment with remaining heat recovery, when only the passenger compartment has heating demands, the refrigerant comes out of the water-cooled condenser 34' and arrives at the first electronic expansion valve 405' and the second electronic expansion valve 406' respectively. The refrigerant passing through the first electronic expansion valve 405' enters the outdoor heat exchanger 42' to absorb ambient heat, and then enters the gas-liquid separator 44' through the third stop valve 403' and the second one-way valve 409', and returns to the electric compressor 41'. The refrigerant passing through the second electronic expansion valve 406' enters the battery cooler 23' to absorb heat at a coolant side, and then returns to the electric compressor 41' again after passing through the gas-liquid separator 44'. A state of the six-way valve 101' on a waterway side is that the fifth port 5' is communicated with the first port 1', the second port 2' is communicated with the fourth port 4'. After coming out of the battery cooler 23', the coolant enters the expansion kettle 11' through the second port 2' and the fourth port 4' of the six-way valve 101', and then flows through the front and rear driving motors 13' respectively through the first water pump 12' in two paths, and then it returns to the battery cooler 23' again through the fifth port 5' and the first port 1' of the six-way valve 101'.

The present invention can heat the coolant in the heating loop through the water-cooled condenser 34' to realize heating of the power battery 22' under a fast charging condition of a low-temperature battery, that is, when only the power battery 22' has the heating demand.

The present invention realizes the series and parallel operations of the cooling loop of the driving motor 13' and the cooling loop of the power battery 22' of the electric vehicle, the low-temperature radiator 14' of the loop of the bypass driving motor 13', the bypass power battery 22', the thermal coupling of the water loop and the cooling loop, the bypass of the passenger compartment and heat exchanger, the reversing of the cooling and heating conditions of the outdoor heat exchanger, the use of heat pumps for heating the power battery 22' and other functions. While ensuring the temperature control efficiency, the present invention reduces the energy consumption of the systems and improves the vehicle endurance.

The above-mentioned embodiments only exemplify the principle and efficacy of the present invention, and are not used to limit the present invention.

In the description, many specific details, such as examples of components and/or methods, are provided to provide a complete understanding of embodiments of the invention. However, those skilled in the art will recognize that embodiments of the present invention can be practiced without one or more specific details or through other devices, systems, assemblies, methods, components, materials, parts, and the like. In other cases, well-known structures, materials, or operations are not specifically shown or described in detail to avoid blurring aspects of embodiments of the present invention.

The reference to "one embodiment", "embodiment" or "specific embodiment" in the entire specification means that the specific features, structures or characteristics described in combination with the embodiments are included in at least one embodiment of the invention, and not necessarily in all embodiments. Therefore, the expressions "in one embodiment", "in an embodiment" or "in a specific embodiment" in different places throughout the specification do not necessarily refer to the same embodiment. In addition, specific features, structures, or characteristics of any particular embodiment of the present invention may be combined with one or more other embodiments within the scope of the appended claims.

It should also be understood that one or more of the elements shown in the drawings may also be implemented in a more separate or more integrated manner, or even removed because they are not operable in some cases, or provided because they can be useful according to a particular application.

In addition, unless otherwise expressly indicated, any arrow in the drawings should be considered as an example only, not a limitation. In addition, unless otherwise specified, the term "or" used here is generally intended to mean "and/or". When the term is foreseen because it is unclear to provide separation or combination capability, the combination of components or steps will also be deemed to have been specified.

As used here and throughout the following claims, "one", and "the" include plural references unless otherwise specified. Similarly, as used in the description here and throughout the following claims, unless otherwise specified, "in" means "in" and "on".

The above description of the embodiments of the present invention (comprising the content described in the abstract of the specification) is not intended to enumerate in detail or limit the invention to the precise form disclosed here.

The system and method have been described here in general to facilitate understanding of the details of the present invention. In addition, various specific details have been given to provide a general understanding of embodiments of the present invention. However, those skilled in the relevant field will realize that embodiments of the invention can be practiced without one or more specific details, or with other devices, systems, accessories, methods, components, materials, parts, etc. In other cases, well-known structures, materials, and/or operations are not particularly shown or described in detail to avoid confusion with various aspects of embodiments of the invention.

The present invention is not intended to limit the specific terms used in the following claims and/or the specific embodiments disclosed as the best way to implement the present invention, but the present invention will include any and all embodiments falling within the scope of the appended claims. Therefore, the scope of the present invention will be determined only by the appended claims.

## Claims

1. An electric vehicle thermal management loop, comprising:
a driving motor cooling pipe system, comprising an expansion kettle (11), a first water pump (12), a driving motor (13), and a low-temperature radiator (14) connected in sequence;
a power battery temperature control pipe system, comprising a second water pump (21), a battery cooler (23), and a power battery (24) connected in sequence;
a first control pipe system, located between the driving motor cooling pipe system and the power battery temperature control pipe system, the first control pipe system configured to enable the driving motor cooling pipe system and the power battery temperature control pipe system to switch among the following three states:
state 1: the driving motor cooling pipe system and the power battery temperature control pipe system forming independent closed loops respectively;
state 2: the driving motor cooling pipe system and the power battery temperature control pipe system connected in series to a closed loop; and
state 3: the expansion kettle (11), the first water pump (12), the driving motor (13), the second water pump (21), the battery cooler (23), and the power battery (24) connected in series to a closed loop;
the electric vehicle thermal management loop further comprises a passenger compartment temperature control pipe system, and the passenger compartment temperature control pipe system comprising an electric compressor (41), an outdoor heat exchanger (42), an evaporator (43), a gas-liquid separator (44), an in-vehicle condenser (45), and a heat exchange pipe (46); and
**characterized in that** the passenger compartment temperature control pipe system further comprise a second control pipe system, configured to enable the passenger compartment temperature control pipe system to switch between the following two states:
state a, the electric compressor (41), the outdoor heat exchanger (42), the evaporator (43), and the gas-liquid separator (44) connected in series in sequence to form a closed loop, and the heat exchange pipe (46) connected in parallel with the evaporator (43); and
state b, the electric compressor (41), the in-vehicle condenser (45), the outdoor heat exchanger (42), and the gas-liquid separator (44) connected in series in sequence to form a closed loop, and the heat exchange pipe (46) connected in parallel with the outdoor heat exchanger (42); and
the heat exchange pipe (46) passing through the battery cooler (23) to realize heat exchange with the power battery temperature control pipe system.

2. The electric vehicle thermal management loop as claimed in claim 1, **characterized in that**, the first control pipe system is configured to enable the motor cooling pipe system and the power battery temperature control pipe system to be switched to state 4;
state 4: the expansion kettle (11), the first water pump (12), the driving motor (13), the second water pump (21), and the battery cooler (23) are sequentially connected in series to a closed loop;
wherein the first control pipe system comprises a six-way valve (31), and the six-way valve (31) comprises:
a first port (1), connected to the low-temperature radiator (14);
a second port (2), connected to one end of a first branch pipe (32), and another end of the first branch pipe (32) connected to a water outlet end of the driving motor (13);
a third port (3), connected to the expansion kettle (11);
a fourth port (4), connected to a water outlet end of the power battery (24);
a fifth port (5), connected to one end of a second branch pipe (33), and another end of the second branch pipe (33) connected to a pipe between the battery cooler (23) and the power battery (24); and
a sixth port (6), connected to the second water pump (21);
wherein the six-way valve (31) is configured to switch among the following stations:
station 1, the first port (1) communicated with the third port (3), and the fourth port (4) communicated with the sixth port (6);
station 2, the first port (1) communicated with the sixth port (6), and the fourth port (4) communicated with the third port (3);
station 3, the second port (2) communicated with the sixth port (6), and the fourth port (4) communicated with the third port (3); and
station 4, the second port (2) communicated with the sixth port (6), and the fifth port (5) communicated with the third port (3).

3. The electric vehicle thermal management loop as claimed in claim 2, **characterized in that**, the first control pipe system comprises a four-way valve (34), a first three-way valve (35), and a second three-way valve (37);
four ports of the four-way valve (34) are respectively connected to the low-temperature radiator (14), the expansion kettle (11), the power battery (24), and the second water pump (21);
two ports of the first three-way valve (35) are connected in series on the pipe between the driving motor (13) and the low-temperature radiator (14), the third port is connected to one end of a third branch pipe (36), and another end of the third branch pipe (36) is connected to a pipe between the low-temperature radiator (14) and the four-way valve (34); and
two ports of the second three-way valve (37) are connected in series on the pipe between the battery cooler (23) and the power battery (24), the third port is connected to one end of a fourth branch pipe (28), and another end of the fourth branch pipe (28) is connected to a pipe between the power battery (24) and the four-way valve (34).

4. The electric vehicle thermal management loop as claimed in claim 2 or 3, **characterized in that**, the second control pipe system comprises:
a main pipe system (400), connected to the electric compressor (41), the outdoor heat exchanger (42), the evaporator (43), and the gas-liquid separator (44) in sequence to form a closed loop;
a first sub-pipe system (401), connected in parallel with the outdoor heat exchanger (42), and the in-vehicle condense (45) connected to the first sub-pipe system (401);
a second sub-pipe system (402), connected in parallel with the evaporator (43), and the heat exchange pipe (46) connected to the second sub-pipe system (402);
a third sub-pipe system (403), connected between the outdoor heat exchanger (42) and the gas-liquid separator (44);
a first control valve assembly, used to control a liquid outlet end of the electric compressor (41) to be connected to either the outdoor heat exchanger (42) or the in-vehicle condenser (45); and
a second control valve assembly, used to control communication with or disconnection of the third sub-pipe system (403).

5. The electric vehicle thermal management loop as claimed in claim 4, **characterized in that**, the first sub-pipe system (401) is provided with a first electronic expansion valve (54), and the first electronic expansion valve (54) is located at a liquid outlet end of the in-vehicle condenser (45); the second sub-pipe system (402) is provided with a second electronic expansion valve (56), and the second electronic expansion valve (56) is located at a liquid inlet end of the heat exchange pipe (46); a liquid inlet end of the evaporator (43) is provided with a third electronic expansion valve (55); the main pipe system (400) is provided with a one-way valve (57), and the one-way valve (57) is located on the main pipe system (400) between the first sub-pipe system (401) and the second sub-pipe system (402); a pressure and temperature sensor is disposed on an outlet of the in-vehicle condenser (45) and/or an outlet of the evaporator (43).

6. The electric vehicle thermal management loop as claimed in any of claims 1 to 5, **characterized in that**, the power battery temperature control pipe system is provided with a first PTC heater (22), and the first PTC heater (22) is located between the second water pump (21) and the battery cooler (23); the evaporator (43) and the in-vehicle condenser (45) are both located in an air duct of a vehicle air conditioning system; and a second PTC heater (47) is disposed in the air duct of the vehicle air conditioning system.

7. A control method for an electric vehicle thermal management loop, **characterized in that** the electric vehicle thermal management loop comprises a driving motor cooling pipe system, a power battery temperature control pipe system, a passenger compartment temperature control pipe system, and a reversing module, connected between the driving motor pipe system and the power battery temperature control pipe system,; the driving motor cooling pipe system comprises an expansion kettle (11), a first water pump (12), a driving motor (13), and a low-temperature radiator (14) connected in sequence; the power battery temperature control pipe system comprises a second water pump (21), a first PTC heater (22), a battery cooler (23), and a power battery (24) connected in sequence; the passenger compartment temperature control pipe system comprises an electric compressor (41), an outdoor heat exchanger (42), an evaporator (43), a gas-liquid separator (44), an in-vehicle condenser (45), a heat exchange pipe (46), and a second PTC heater (47); the heat exchange pipe (46) passes through the battery cooler (23) to realize heat exchange with the power battery temperature control pipe system; and
the control method comprises:
controlling the driving motor cooling pipe system and the power battery temperature control pipe system to form independent closed loops respectively, when both the passenger compartment and the power battery have cooling demands; controlling the electric compressor (41), the outdoor heat exchanger (42), the evaporator (43), and the gas-liquid separator (44) to be connected in series in sequence to form a closed loop, and the heat exchange pipe (46) connected in parallel with the evaporator (43); and controlling the first PTC heater (22) to turn off;
controlling the driving motor cooling pipe system and the power battery temperature control pipe system integrally to form a closed loop in series, when the passenger compartment has a cooling demand, the power battery cooling demand is not high, and outlet water temperature of the driving motor loop is lower than power battery water temperature; controlling the electric compressor (41), the outdoor heat exchanger (42), the evaporator (43), and the gas-liquid separator (44) to be connected in series in sequence to form a closed loop, and controlling the heat exchange pipe (46) to be disconnected from the temperature control pipe system in the passenger compartment; and controlling the first PTC heater (22) to turn off;
controlling the expansion kettle (11), the first water pump (12), the driving motor (13), the second water pump (21), the battery cooler (23), and the power battery (24) to form a closed loop in series, when the power battery (24) has a small load heating demand and the outlet water temperature of the driving motor (13) is higher than that of the power motor loop; controlling the heat exchange pipe (46) disconnected from the passenger compartment temperature control pipe system; and controlling the first PTC heater (22) to turn off;
controlling the driving motor cooling pipe system and the power battery temperature control pipe system to form independent closed loops respectively, when both the passenger compartment and the power battery (24) have heating demands; controlling the first PTC heater (22) to turn on; controlling the electric compressor (41), the in-vehicle condenser (45), the outdoor heat exchanger (42), and the gas-liquid separator (44) to be connected in series in sequence to form a closed loop; and controlling the heat exchange pipe (46) disconnected from the passenger compartment temperature control pipe system; and
controlling the expansion kettle (11), the first water pump (12), the driving motor (13), the second water pump (21), and the battery cooler (23) to be connected in series in sequence to form a closed loop, when only the passenger compartment has heating demand; controlling the electric compressor (41), the in-vehicle condenser (45), the outdoor heat exchanger (42), and the gas-liquid separator (44) to be connected in series in sequence to form a closed loop; and controlling the heat exchange pipe (46) connected in parallel with the outdoor heat exchanger (42).

8. A pure electric vehicle, comprising:
a passenger compartment;
a power system; and
a thermal management loop, the thermal management loop comprising:
a first pipe system (10'), comprising an expansion kettle (11'), a first water pump (12'), a driving motor (13'), and a low-temperature radiator (14') connected in series;
a second pipe system (20'), comprising a second water pump (21'), a power battery (22'), and a battery cooler (23') connected in series;
a first reversing module, connected between the first pipe system (10') and the second pipe system (20'), and the first reversing module configured to enable the first pipe system (10') and the second pipe system (20') to switch among the following four stations:
station 1, the first pipe system (10') and the second pipe system (20') forming independent closed loops respectively;
station 2, the expansion kettle (11'), the first water pump (12'), the driving motor (13'), the low-temperature radiator (14'), and the power battery (22') connected in series to form a closed loop;
station 3, the expansion kettle (11'), the first water pump (12'), the driving motor (13'), and the power battery (22') connected in series to form a closed loop;
station 4, the expansion kettle (11'), the first water pump (12'), the driving motor (13'), and the battery cooler (23') connected in series to form a closed loop;
wherein the battery cooler (23') comprises a first flow channel (231') and a second flow channel (232'), the first flow channel (231') and the second flow channel (232') are independent of each other and are able to conduct heat exchange therebetween, the first flow channel (231') is connected in series to the second pipe system, and the second flow channel (232') is connected to a low-temperature pipe of a vehicle air conditioning system, **characterized in that** the first reversing module is configured to enable the first pipe system (10') and the second pipe system (20') to be switched to station 5, and the station 5 is that: the expansion kettle (1 1'), the first water pump (12'), and the driving motor (13') form a closed loop independently; and the second water pump (21') and the power battery (22') form a closed loop independently..

9. The pure electric vehicle as claimed in claim 8, **characterized in that**, the electric vehicle thermal management loop further comprises a third pipe system (30'), and the third pipe system (30') comprises a third water pump (3 1'), a PTC heater (32'), and a heater core (33') connected in series, the heater core (33') is located in an air duct of a vehicle air conditioning system, and the heater core (33') is connected in parallel with both ends of the power battery (22'); the third pipe system (30') is provided with a second reversing module, and the second reversing module is configured to enable the third pipe system (30') to switch among the following three stations:
station a, the third water pump (31'), the PTC heater (32'), and the heater core (33') connected in series to form a closed loop;
station b, the third water pump (31'), the PTC heater (32'), and power battery (22') connected in series to form a closed loop;
station c, the third water pump (31'), the PTC heater (32'), and the heater core (33') connected in series to form a closed loop, while the third water pump (3 1'), the PTC heater (32'), and the power battery (22') connected in series to form a closed loop.

10. The pure electric vehicle as claimed in claim 9, **characterized in that**, the third pipe system (30') is connected in series with a water-cooled condenser (34'), the water-cooled condenser (34') comprises a flow channel a (341') and a flow channel b (342'), the flow channel a (341') and the flow channel b (342') are independent from each other and are able to conduct heat exchange therebetween, the flow channel a (341') is connected in series with the third-pipe system (30'), and the flow channel b (342') is connected to a high-temperature pipe of the vehicle air conditioning system; the vehicle air conditioning system comprises an electric compressor (41'), an outdoor heat exchanger (42'), an evaporator (43'), and a gas-liquid separator (44') connected to each other; the vehicle air conditioning system further comprises a third reversing module configured to enable the vehicle air conditioning system to switch between the following two stations:
station I, the electric compressor (41'), the outdoor heat exchanger (42'), the evaporator (43'), and the gas-liquid separator (44') connected in series to form a closed loop, and the second flow channel (232') connected in parallel with the evaporator (43');
station II, the electric compressor (41'), the flow channel b (342'), the outdoor heat exchanger (42') and the gas-liquid separator (44') connected in series to form a closed loop, and the second flow channel (232') connected in parallel with the outdoor heat exchanger (42'); and
the evaporator (43') located in the air duct of the vehicle air conditioning system.

11. The pure electric vehicle as claimed in claim 8 or 10, **characterized in that**, the electric compressor (41'), the outdoor heat exchanger (42'), the evaporator (43'), and the gas-liquid separator (44') are connected in series on a main pipe system (40'), and the main pipe system (40') is a closed loop; one end of the flow channel b (342') is connected to one main pipe system (40') between the electric compressor (41') and the outdoor heat exchanger (42'), and another end of the flow channel b (342') is connected to the main pipe system (40') between the outdoor heat exchanger (42') and the evaporator (43'); and both ends of the second flow channel (232') are respectively connected to both ends of the evaporator (43'); the third reversing module comprises:
a first stop valve (401'), located on the main pipe system (40') between the electric compressor (41') and the outdoor heat exchanger (42');
a second stop valve (402'), located on the flow channel b (342');
a return branch pipe (404'), one end of the return branch pipe connected to the main pipe system (40') between the first stop valve (401') and the outdoor heat exchanger (42'), and another end connected to the gas-liquid separator (44'); and
a third stop valve (403'), located on the return branch pipe (404').

12. The pure electric vehicle as claimed in claim 11, **characterized in that**, the vehicle air conditioning system further comprises a first electronic expansion valve (405') located on a pipe leading from the flow channel b (342') to the outdoor heat exchanger (42') in the station II;
both ends of the first electronic expansion valve (405') are connected in parallel with a first one-way valve (408');
a second one-way valve (409') is connected in series on the return branch pipe (404');
a second electronic expansion valve (406') is connected in series on the second flow channel (232');
the vehicle air conditioning system also comprises a third electronic expansion valve (407'), and the third electronic expansion valve (407') is located on a pipe leading from the outdoor heat exchanger (42') to the evaporator (43') under the status of station I.

13. The pure electric vehicle as claimed in any of claims 7 to 12, **characterized in that**, the first reversing module comprises a six-way valve (101'), a first branch pipe (102'), and a second branch pipe (103');
one end of the first branch pipe (102') is connected to the pipe between the driving motor (13') and the low-temperature radiator (14'), and another end is connected to the six-way valve (101');
one end of the second branch pipe (103') is connected to the pipe between the power battery (22') and the battery cooler (23'), and another end is connected to the six-way valve (101');
the six-way valve (101') has:
a first port (1'), connected to the battery cooler (23');
a second port (2'), connected to the second branch pipe (103');
a third port (3'), connected to the second water pump (21');
a fourth port (4'), connected to the expansion kettle (11');
a fifth port (5'), connected to the first branch pipe (102');
a sixth port (6'), connected to the low-temperature radiator (14');
the six-way valve (101') is configured as follows:
the first port (1') is able to be communicated with or disconnected from any one of the third port (3') and the fourth port (4');
the second port (2') is able to be communicated with or disconnected from any one of the third port (3') and the fourth port (4');
the fifth port (5') is able to be communicated with or disconnected from any one of the third port (3') and the fourth port (4'); and
the sixth port (6') is able to be communicated with or disconnected from any one of the third port (3') and the fourth port (4').

## Patentansprüche

1. Ein Wärmemanagementkreislauf für ein Elektrofahrzeug, der Folgendes umfasst:
ein Kühlrohrsystem für den Antriebsmotor, das einen Expansionskessel (11), eine erste Wasserpumpe (12), einen Antriebsmotor (13) und einen Niedertemperaturkühler (14) umfasst, die hintereinander geschaltet sind;
ein Strombatterie-Temperaturregelungsrohrsystem, das eine zweite Wasserpumpe (21), einen Batteriekühler (23) und eine Strombatterie (24) umfasst, die hintereinander geschaltet sind;
ein erstes Steuerrohrsystem, das zwischen dem Kühlrohrsystem des Antriebsmotors und dem Temperaturregelungssystem der Leistungsbatterie angeordnet ist, wobei das erste Steuerrohrsystem so konfiguriert ist, dass es das Kühlrohrsystem des Antriebsmotors und das Temperaturregelungssystem der Leistungsbatterie in die Lage versetzt, zwischen den folgenden drei Zuständen zu wechseln:
Zustand 1: Das Kühlleitungssystem des Antriebsmotors und das Temperaturregelungssystem der Batterie bilden jeweils unabhängige geschlossene Kreisläufe;
Zustand 2: das Kühlrohrsystem des Antriebsmotors und das Temperaturregelrohrsystem der Leistungsbatterie sind in Reihe zu einem geschlossenen Kreislauf verbunden; und
Zustand 3: Der Expansionskessel (11), die erste Wasserpumpe (12), der Antriebsmotor (13), die zweite Wasserpumpe (21), der Batteriekühler (23) und die Strombatterie (24) sind zu einem geschlossenen Kreislauf in Reihe geschaltet;
der Wärmemanagementkreislauf des Elektrofahrzeugs ferner ein Fahrgastraum-Temperaturregelungsrohrsystem umfasst, und das Fahrgastraum-Temperaturregelungsrohrsystem einen elektrischen Kompressor (41), einen Außenwärmetauscher (42), einen Verdampfer (43), einen Gas-Flüssigkeits-Abscheider (44), einen fahrzeuginternen Kondensator (45) und ein Wärmeaustauschrohr (46) umfasst, und
**dadurch gekennzeichnet, dass** das Fahrgastraumtemperatur-Steuerrohrsystem ferner ein zweites Steuerrohrsystem umfasst, das so konfiguriert ist, dass das Fahrgastraumtemperatur-Steuerrohrsystem zwischen den folgenden zwei Zuständen umschalten kann:
Zustand a, der elektrische Kompressor (41), der Außenwärmetauscher (42), der Verdampfer (43) und der Gas-Flüssigkeits-Abscheider (44) sind hintereinander in Reihe geschaltet, um einen geschlossenen Kreislauf zu bilden, und das Wärmeaustauschrohr (46) ist parallel zum Verdampfer (43) geschaltet; und
Zustand b, der elektrische Kompressor (41), der fahrzeuginterne Kondensator (45), der Außenwärmetauscher (42) und der Gas-Flüssigkeits-Abscheider (44) sind nacheinander in Reihe geschaltet, um einen geschlossenen Kreislauf zu bilden, und das Wärmeaustauschrohr (46) ist parallel zum Außenwärmetauscher (42) geschaltet; und
das Wärmeaustauschrohr (46) verläuft durch den Batteriekühler (23), um einen Wärmeaustausch mit dem Temperaturkontrollrohrsystem der Leistungsbatterie zu realisieren.

2. Thermomanagementkreislauf für ein Elektrofahrzeug nach Anspruch 1, **dadurch gekennzeichnet, dass** das erste Steuerrohrsystem so konfiguriert ist, dass das Motorkühlrohrsystem und das Strombatterie-Temperatursteuerrohrsystem in den Zustand 4 geschaltet werden können;
Zustand 4: Der Expansionskessel (11), die erste Wasserpumpe (12), der Antriebsmotor (13), die zweite Wasserpumpe (21) und der Batteriekühler (23) sind hintereinander zu einem geschlossenen Kreislauf verbunden;
wobei das erste Steuerleitungssystem ein Sechs-Wege-Ventil (31) umfasst und das Sechs-Wege-Ventil (31) umfasst:
einen ersten Anschluss (1), der mit dem Niedertemperaturkühler (14) verbunden ist;
einen zweiten Anschluss (2), der mit einem Ende einer ersten Abzweigleitung (32) verbunden ist, und ein anderes Ende der ersten Abzweigleitung (32), das mit einem Wasserauslassende des Antriebsmotors (13) verbunden ist;
einen dritten Anschluss (3), der mit dem Expansionskessel (11) verbunden ist;
eine vierte Öffnung (4), die mit einem Wasserauslass der Energiebatterie (24) verbunden ist;
einen fünften Anschluss (5), der mit einem Ende einer zweiten Abzweigleitung (33) verbunden ist, und ein anderes Ende der zweiten Abzweigleitung (33), das mit einer Leitung zwischen dem Batteriekühler (23) und der Leistungsbatterie verbunden ist
(24); und
einen sechsten Anschluss (6), der mit der zweiten Wasserpumpe (21) verbunden ist;
wobei das Sechswegeventil (31) so konfiguriert ist, dass es zwischen den folgenden Stationen umschaltet:
Station 1, der erste Anschluss (1) ist mit dem dritten Anschluss (3) verbunden, und der vierte Anschluss (4) ist mit dem sechsten Anschluss (6) verbunden;
Station 2, wobei der erste Anschluss (1) mit dem sechsten Anschluss (6) und der vierte Anschluss (4) mit dem dritten Anschluss (3) verbunden ist;
Station 3, wobei der zweite Anschluss (2) mit dem sechsten Anschluss (6) und der vierte Anschluss (4) mit dem dritten Anschluss (3) verbunden ist; und
Station 4, wobei der zweite Anschluss (2) mit dem sechsten Anschluss (6) und der fünfte Anschluss (5) mit dem dritten Anschluss (3) verbunden ist.

3. Thermomanagementkreislauf für Elektrofahrzeuge nach Anspruch 2, **dadurch gekennzeichnet, dass** das erste Steuerrohrsystem ein Vierwegeventil (34), ein erstes Dreiwegeventil (35) und ein zweites Dreiwegeventil (37) umfasst;
die vier Anschlüsse des Vierwegeventils (34) sind jeweils mit dem Niedertemperaturheizkörper (14), dem Ausdehnungskessel (11), der Strombatterie (24) und der zweiten Wasserpumpe (21) verbunden;
zwei Anschlüsse des ersten Dreiwegeventils (35) in der Leitung zwischen dem Antriebsmotor (13) und dem Niedertemperaturheizkörper (14) in Reihe geschaltet sind, der dritte Anschluss mit einem Ende einer dritten Zweigleitung (36) verbunden ist und ein anderes Ende der dritten Zweigleitung (36) mit einer Leitung zwischen dem Niedertemperaturheizkörper (14) und dem Vierwegeventil (34) verbunden ist; und
zwei Anschlüsse des zweiten Dreiwegeventils (37) sind in der Leitung zwischen dem Batteriekühler (23) und der Leistungsbatterie (24) in Reihe geschaltet, der dritte Anschluss ist mit einem Ende einer vierten Abzweigleitung (28) verbunden, und ein anderes Ende der vierten Abzweigleitung (28) ist mit einer Leitung zwischen der Leistungsbatterie (24) und dem Vierwegeventil (34) verbunden.

4. Wärmemanagementkreislauf für Elektrofahrzeuge nach Anspruch 2 oder 3, **dadurch gekennzeichnet, dass** das zweite Steuerrohrsystem umfasst:
ein Hauptrohrsystem (400), das nacheinander mit dem elektrischen Verdichter (41), dem Außenwärmetauscher (42), dem Verdampfer (43) und dem Gas-Flüssigkeits-Abscheider (44) verbunden ist, um einen geschlossenen Kreislauf zu bilden;
ein erstes Teilrohrsystem (401), das parallel zum Außenwärmetauscher (42) geschaltet ist, und den bordeigenen Kondensator (45), der mit dem ersten Teilrohrsystem (401) verbunden ist;
ein zweites Teilrohrsystem (402), das parallel zum Verdampfer (43) geschaltet ist, und das Wärmeaustauschrohr (46), das mit dem zweiten Teilrohrsystem (402) verbunden ist;
ein drittes Teilrohrsystem (403), das zwischen dem Außenwärmetauscher (42) und dem Gas-Flüssigkeits-Abscheider (44) angeschlossen ist;
eine erste Steuerventilbaugruppe, die zur Steuerung eines Flüssigkeitsauslassendes des elektrischen Kompressors verwendet wird
(41), der entweder an den Außenwärmetauscher (42) oder den bordeigenen Kondensator (45) angeschlossen wird, und
eine zweite Steuerventilbaugruppe, die zur Steuerung der Verbindung mit dem dritten Teilleitungssystem (403) oder zur Trennung von diesem dient.

5. Wärmemanagementkreislauf für ein Elektrofahrzeug nach Anspruch 4, **dadurch gekennzeichnet, dass** das erste Teilrohrsystem (401) mit einem ersten elektronischen Expansionsventil (54) versehen ist, und das erste elektronische Expansionsventil (54) an einem Flüssigkeitsauslassende des fahrzeuginternen Kondensators angeordnet ist.
(45); das zweite Nebenrohrsystem (402) ist mit einem zweiten elektronischen Expansionsventil (56) versehen, und das zweite elektronische Expansionsventil (56) ist an einem Flüssigkeitseinlassende des Wärmetauscherrohrs (46) angeordnet; ein Flüssigkeitseinlassende des Verdampfers (43) ist mit einem dritten elektronischen Expansionsventil (55) versehen; das Hauptrohrsystem (400) mit einem Einwegventil (57) versehen ist und das Einwegventil (57) an dem Hauptrohrsystem (400) zwischen dem ersten Teilrohrsystem (401) und dem zweiten Teilrohrsystem (402) angeordnet ist; ein Druck- und Temperatursensor an einem Auslass des bordeigenen Kondensators (45) und/oder einem Auslass des Verdampfers (43) angeordnet ist.

6. Wärmemanagementkreislauf für ein Elektrofahrzeug nach einem der Ansprüche 1 bis 5, **dadurch gekennzeichnet, dass** das Leistungsbatterie-Temperaturregelungsrohrsystem mit einer ersten PTC-Heizung (22) versehen ist und die erste PTC-Heizung (22) zwischen der zweiten Wasserpumpe (21) und dem Batteriekühler (23) angeordnet ist; der Verdampfer (43) und der fahrzeuginterne Kondensator (45) beide in einem Luftkanal einer Fahrzeugklimaanlage angeordnet sind; und eine zweite PTC-Heizung (47) in dem Luftkanal der Fahrzeugklimaanlage angeordnet ist.

7. Steuerungsverfahren für einen Wärmemanagementkreislauf eines Elektrofahrzeugs, **dadurch gekennzeichnet, dass** der Wärmemanagementkreislauf eines Elektrofahrzeugs ein Kühlrohrsystem für den Antriebsmotor, ein Temperatursteuerungssystem für die Leistungsbatterie, ein Temperatursteuerungssystem für den Fahrgastraum und ein Umkehrmodul umfasst, das zwischen dem Kühlrohrsystem für den Antriebsmotor und dem Temperatursteuerungssystem für die Leistungsbatterie angeschlossen ist, wobei das Kühlrohrsystem für den Antriebsmotor einen Expansionskessel (11), eine erste Wasserpumpe (12), einen Antriebsmotor (13) und einen Niedertemperaturkühler umfasst.
(14), die hintereinander geschaltet sind; das Strombatterie-Temperaturregelungsrohrsystem umfasst eine zweite Wasserpumpe (21), einen ersten PTC-Heizer (22), einen Batteriekühler (23) und eine Strombatterie (24), die miteinander in Reihe verbunden sind,
das Fahrgastraum-Temperaturregelungsrohrsystem umfasst einen elektrischen Kompressor (41), einen Außenwärmetauscher (42), einen Verdampfer (43), einen Gas-Flüssigkeits-Abscheider (44), einen fahrzeuginternen Kondensator (45), ein Wärmeaustauschrohr (46) und eine zweite PTC-Heizung (47); das Wärmeaustauschrohr (46) führt durch den Batteriekühler (23), um einen Wärmeaustausch mit dem Strombatterie-Temperaturregelungsrohrsystem zu realisieren; und
das Kontrollverfahren umfasst:
Steuern des Kühlleitungssystems des Antriebsmotors und des Temperaturregelungsleitungssystems der Leistungsbatterie, um jeweils unabhängige geschlossene Kreisläufe zu bilden, wenn sowohl der Fahrgastraum als auch die Leistungsbatterie Kühlbedarf haben; Steuern des elektrischen Kompressors (41), des Außenwärmetauschers (42), des Verdampfers (43) und des Gas-Flüssigkeits-Abscheiders (44), so dass sie nacheinander in Reihe geschaltet sind, um einen geschlossenen Kreislauf zu bilden, und des Wärmetauscherrohrs (46), das parallel zum Verdampfer (43) geschaltet ist; und Steuern des Abschaltens der ersten PTC-Heizung (22);
Steuerung des Kühlleitungssystems des Antriebsmotors und des Temperaturregelungssystems der Leistungsbatterie, um einen geschlossenen Kreislauf in Reihe zu bilden, wenn der Fahrgastraum einen Kühlbedarf hat, der Kühlbedarf der Leistungsbatterie nicht hoch ist und die Auslasswassertemperatur des Antriebsmotorkreislaufs niedriger als die Wassertemperatur der Leistungsbatterie ist; Steuerung des elektrischen Kompressors (41), des Außenwärmetauschers (42), des Verdampfers (43) und des Gas-Flüssigkeits-Abscheiders
(44) in Reihe zu schalten, um eine geschlossene Schleife zu bilden, und das Wärmetauscherrohr (46) so zu steuern, dass es von dem Temperaturregelrohrsystem im Fahrgastraum getrennt wird; und das erste PTC-Heizgerät (22) so zu steuern, dass es sich ausschaltet;
Steuern des Ausdehnungskessels (11), der ersten Wasserpumpe (12), des Antriebsmotors (13), der zweiten Wasserpumpe (21), des Batteriekühlers (23) und der Leistungsbatterie (24), um eine geschlossene Schleife in Reihe zu bilden, wenn die Leistungsbatterie (24) einen geringen Lastheizbedarf hat und die Auslasswassertemperatur des Antriebsmotors (13) höher ist als die der Leistungsmotorschleife; Steuern des Wärmetauscherrohrs (46), das von dem Fahrgastraum-Temperatursteuerrohrsystem getrennt ist; und Steuern der ersten PTC-Heizung (22), um sie auszuschalten;
Steuerung des Kühlleitungssystems des Antriebsmotors und des Temperaturregelleitungssystems der Leistungsbatterie, um jeweils unabhängige geschlossene Kreisläufe zu bilden, wenn sowohl der Fahrgastraum als auch die Leistungsbatterie (24) Heizbedarf haben; Steuerung, um die erste PTC-Heizung (22) einzuschalten; den elektrischen Kompressor (41), den fahrzeuginternen Kondensator (45), den Außenwärmetauscher (42) und den Gas-Flüssigkeits-Abscheider (44) so zu steuern, dass sie nacheinander in Reihe geschaltet werden, um einen geschlossenen Kreislauf zu bilden; und das vom Fahrgastraum-Temperaturregelungsrohrsystem getrennte Wärmetauscherrohr (46) zu steuern; und
Steuerung des Ausdehnungskessels (11), der ersten Wasserpumpe (12), des Antriebsmotors (13), der zweiten Wasserpumpe (21) und des Batteriekühlers (23), die nacheinander in Reihe geschaltet werden, um einen geschlossenen Kreislauf zu bilden, wenn nur der Fahrgastraum Heizbedarf hat; Steuern des elektrischen Kompressors (41), des fahrzeuginternen Kondensators (45), des Außenwärmetauschers (42) und des Gas-Flüssigkeits-Abscheiders (44), so dass sie in Reihe geschaltet werden, um einen geschlossenen Kreislauf zu bilden; und Steuern des Wärmeaustauschrohrs (46), das parallel zum Außenwärmetauscher (42) geschaltet ist.

8. Ein reines Elektrofahrzeug, das Folgendes umfasst:
einen Fahrgastraum;
ein Stromversorgungssystem; und
einen Wärmemanagementkreislauf, wobei der Wärmemanagementkreislauf umfasst:
ein erstes Rohrsystem (10'), das einen Expansionskessel (11'), eine erste Wasserpumpe (12'), einen Antriebsmotor (13') und einen Niedertemperaturheizkörper (14') umfasst, die in Reihe geschaltet sind;
ein zweites Leitungssystem (20'), das eine zweite Wasserpumpe (21'), eine Energiebatterie (22') und einen Batteriekühler (23') umfasst, die in Reihe geschaltet sind;
ein erstes Reversiermodul, das zwischen das erste Rohrsystem (10') und das zweite Rohrsystem (20') geschaltet ist, wobei das erste Reversiermodul so konfiguriert ist, dass das erste Rohrsystem (10') und das zweite Rohrsystem (20') zwischen den folgenden vier Stationen wechseln können:
Station 1, wobei das erste Rohrsystem (10') und das zweite Rohrsystem (20') jeweils unabhängige geschlossene Kreisläufe bilden;
Station 2, der Expansionskessel (11'), die erste Wasserpumpe (12'), der Antriebsmotor (13'), der Niedertemperaturkühler (14') und die Strombatterie (22') sind in Reihe geschaltet und bilden einen geschlossenen Kreislauf;
Station 3, der Expansionskessel (11'), die erste Wasserpumpe (12'), der Antriebsmotor (13'), und die Leistungsbatterie (22') sind in Reihe geschaltet, um einen geschlossenen Kreislauf zu bilden;
Station 4, der Expansionskessel (11'), die erste Wasserpumpe (12'), der Antriebsmotor (13') und der Batteriekühler (23') sind in Reihe geschaltet, um einen geschlossenen Kreislauf zu bilden;
wobei der Batteriekühler (23') einen ersten Strömungskanal (231') und einen zweiten Strömungskanal (232') aufweist, der erste Strömungskanal (231') und der zweite Strömungskanal (232') unabhängig voneinander sind und einen Wärmeaustausch zwischen ihnen durchführen können, der erste Strömungskanal (231') in Reihe mit dem zweiten Rohrsystem verbunden ist, der erste Strömungskanal (231') mit dem zweiten Rohrsystem in Reihe geschaltet ist und der zweite Strömungskanal (232') mit einer Niedertemperaturleitung einer Fahrzeugklimaanlage verbunden ist, **dadurch gekennzeichnet, dass** das erste Umschaltmodul so ausgestaltet ist, dass das erste Rohrsystem (10') und das zweite Rohrsystem (20') auf Station 5 geschaltet werden können, und die Station 5 diejenige ist: der Expansionskessel (11'), die erste Wasserpumpe (12') und der Antriebsmotor (13') unabhängig voneinander einen geschlossenen Kreislauf bilden; und die zweite Wasserpumpe (21') und die Energiebatterie (22') unabhängig voneinander einen geschlossenen Kreislauf bilden.

9. Rein elektrisches Fahrzeug nach Anspruch 8, **dadurch gekennzeichnet, dass** der Wärmemanagementkreislauf des elektrischen Fahrzeugs ferner ein drittes Rohrsystem (30') umfasst, und das dritte Rohrsystem (30') eine dritte Wasserpumpe (31'), eine PTC-Heizung (32') und einen Heizkern (33') umfasst, die in Reihe geschaltet sind, wobei der Heizkern (33') in einem Luftkanal einer Fahrzeugklimaanlage angeordnet ist und der Heizkern (33') parallel zu beiden Enden der Leistungsbatterie (22') geschaltet ist; das dritte Rohrsystem (30') mit einem zweiten Umkehrmodul versehen ist, und das zweite Umkehrmodul so konfiguriert ist, dass es das dritte Rohrsystem (30') in die Lage versetzt, zwischen den folgenden drei Stationen zu wechseln:
Station a, die dritte Wasserpumpe (31'), die PTC-Heizung (32') und der Heizungskern (33') sind in Reihe geschaltet, um einen geschlossenen Kreislauf zu bilden;
Station b, die dritte Wasserpumpe (31'), die PTC-Heizung (32') und die Strombatterie (22') sind in Reihe geschaltet, um einen geschlossenen Kreislauf zu bilden;
Station c, die dritte Wasserpumpe (31'), die PTC-Heizung (32') und der Heizungskern (33') sind in Reihe geschaltet, um einen geschlossenen Kreislauf zu bilden, während die dritte Wasserpumpe (31'), die PTC-Heizung (32') und die Strombatterie (22') in Reihe geschaltet sind, um einen geschlossenen Kreislauf zu bilden.

10. Reines Elektrofahrzeug nach Anspruch 9, **dadurch gekennzeichnet, dass** das dritte Rohrsystem (30') mit einem wassergekühlten Kondensator (34') in Reihe geschaltet ist, der wassergekühlte Kondensator (34') einen Strömungskanal a (341') und einen Strömungskanal b (342') umfasst, der Strömungskanal a (341') und der Strömungskanal b (342') unabhängig voneinander sind und einen Wärmeaustausch zwischen ihnen durchführen können, der Strömungskanal a (341') mit dem dritten Rohrsystem (30') in Reihe geschaltet ist,
und der Strömungskanal b (342') mit einer Hochtemperaturleitung der Fahrzeugklimaanlage verbunden ist; die Fahrzeugklimaanlage einen elektrischen Kompressor (41'), einen Außenwärmetauscher (42'), einen Verdampfer (43') und einen Gas-Flüssigkeits-Abscheider (44') umfasst, die miteinander verbunden sind; die Fahrzeugklimaanlage ferner ein drittes Umschaltmodul umfasst, das so konfiguriert ist, dass es der Fahrzeugklimaanlage ermöglicht, zwischen den folgenden zwei Stationen zu wechseln:
Station I, der elektrische Kompressor (41'), der Außenwärmetauscher (42'), der Verdampfer (43') und der Gas-Flüssigkeits-Abscheider (44') in Reihe geschaltet sind, um einen geschlossenen Kreislauf zu bilden, und der zweite Strömungskanal (232') parallel zum Verdampfer (43') angeschlossen ist;
Station II, der elektrische Verdichter (41'), der Strömungskanal b (342'), der Außenwärmetauscher (42') und der Gas-Flüssigkeits-Abscheider (44') sind in Reihe geschaltet, um einen geschlossenen Kreislauf zu bilden, und der zweiten Strömungskanal (232') parallel mit dem Außenwärmetauscher (42') verbunden ist; und
den Verdampfer (43') sich im Luftkanal der Fahrzeugklimaanlage befindet.

11. Reines Elektrofahrzeug nach Anspruch 8 oder 10, **dadurch gekennzeichnet, dass** der elektrische Kompressor (41'), der Außenwärmetauscher (42'), der Verdampfer (43') und der Gas-Flüssigkeits-Abscheider (44') in einem Hauptrohrsystem (40') in Reihe geschaltet sind, und das Hauptrohrsystem (40') ein geschlossener Kreislauf ist; ein Ende des Strömungskanals b (342') mit einem Hauptrohrsystem (40') zwischen dem elektrischen Kompressor (41') und dem Außenwärmetauscher (42') verbunden ist, und ein anderes Ende des Strömungskanals b (342') mit dem Hauptrohrsystem (40') zwischen dem Außenwärmetauscher (42') und dem Verdampfer (43') verbunden ist; und beide Enden des zweiten Strömungskanals (232') jeweils mit beiden Enden des Verdampfers (43') verbunden sind; das dritte Umkehrmodul umfasst: ein erstes Absperrventil (401') in dem Hauptrohrsystem (40') zwischen dem elektrischen
Kompressor (41') und dem Außenwärmetauscher (42');
ein zweites Absperrventil (402'), das sich im Strömungskanal b (342') befindet;
eine Rücklauf-Zweigleitung (404'), wobei ein Ende der Rücklauf-Zweigleitung mit dem Hauptrohrsystem (40') zwischen dem ersten Absperrventil (401') und dem Außenwärmetauscher (42') verbunden ist und das andere Ende mit dem Gas-Flüssigkeits-Abscheider (44') verbunden ist; und
ein drittes Absperrventil (403'), das sich in der Rücklaufleitung (404') befindet.

12. Rein elektrisches Fahrzeug nach Anspruch 11, **dadurch gekennzeichnet, dass** die Fahrzeugluft- Konditionierungsanlage ferner ein erstes elektronisches Expansionsventil (405') umfasst, das sich an einer vom Strömungskanal b (342') zum Außenwärmetauscher (42') in der Station II führenden Leitung befindet;
beide Enden des ersten elektronischen Expansionsventils (405') sind parallel mit einem ersten Einwegventil (408') verbunden;
ein zweites Einwegventil (409') wird in Reihe an die Rücklaufleitung (404') angeschlossen;
ein zweites elektronisches Expansionsventil (406') ist in Reihe mit dem zweiten Strömungskanal (232') geschaltet;
die Fahrzeugklimaanlage auch ein drittes elektronisches Expansionsventil (407') umfasst, und das dritte elektronische Expansionsventil (407') sich auf einer Leitung befindet, die von dem Außenwärmetauscher (42') zu dem Verdampfer (43') unter dem Zustand der Station I führt.

13. Reines Elektrofahrzeug nach einem der Ansprüche 7 bis 12, **dadurch gekennzeichnet,**
**dass** das erste Umkehrmodul ein Sechswegeventil (101'), eine erste Abzweigleitung (102') und eine zweite Abzweigleitung (103') umfasst;
ein Ende der ersten Abzweigleitung (102') ist mit der Leitung zwischen dem Antriebsmotor (13') und dem Niedertemperaturheizkörper (14') verbunden, und ein anderes Ende ist mit dem Sechswegeventil (101') verbunden;
ein Ende der zweiten Abzweigleitung (103') ist mit der Leitung zwischen der Leistungsbatterie (22') und dem Batteriekühler (23') verbunden, und ein anderes Ende ist mit dem Sechswegeventil (101') verbunden;
das Sechs-Wege-Ventil (101') hat:
einen ersten Anschluss (1'), der mit dem Batteriekühler (23') verbunden ist;
einen zweiten Anschluss (2'), der mit dem zweiten Abzweigrohr (103') verbunden ist; einen dritten Anschluss (3'), der mit der zweiten Wasserpumpe (21') verbunden ist;
eine vierte Öffnung (4'), die mit dem Expansionskessel (11') verbunden ist; eine fünfte Öffnung (5'), die mit der ersten Abzweigleitung (102') verbunden ist;
einen sechsten Anschluss (6'), der mit dem Niedertemperaturheizkörper (14') verbunden ist; das Sechswegeventil (101') ist wie folgt konfiguriert:
der erste Anschluss (1') kann mit dem dritten Anschluss (3') oder dem vierten Anschluss (4') verbunden oder von diesen getrennt werden;
der zweite Anschluss (2') kann mit dem dritten Anschluss (3') oder dem vierten Anschluss (4') verbunden oder von diesen getrennt werden;
der fünfte Anschluss (5') mit dem dritten Anschluss (3') oder dem vierten Anschluss (4') verbunden oder von diesen getrennt werden kann; und
der sechste Anschluss (6') kann mit dem dritten Anschluss (3') oder dem vierten Anschluss (4') verbunden oder von ihnen getrennt werden.

## Revendications

1. Un circuit de gestion thermique pour un véhicule électrique, qui comprend les éléments suivants :
un système de tuyaux de refroidissement pour le moteur d'entraînement, qui comprend une chaudière de détente (11), une première pompe à eau (12), un moteur d'entraînement (13) et un refroidisseur à basse température (14), qui sont montés en série ;
un système de tuyauterie de régulation de température de batterie d'alimentation comprenant une seconde pompe à eau (21), un refroidisseur de batterie (23) et une batterie d'alimentation (24) connectés en série ;
un premier système de tube de commande disposé entre le système de tube de refroidissement du moteur d'entraînement et le système de régulation de température de la batterie de puissance, le premier système de tube de commande étant configuré pour permettre au système de tube de refroidissement du moteur d'entraînement et au système de régulation de température de la batterie de puissance de passer entre les trois états suivants :
État 1 : le système de conduites de refroidissement du moteur d'entraînement et le système de régulation de la température de la batterie forment chacun des circuits fermés indépendants ;
état 2 : la tuyauterie de refroidissement du moteur d'entraînement et la tuyauterie de régulation de la température de la batterie de puissance sont connectées en série pour former un circuit fermé ; et
État 3 : la chaudière de détente (11), la première pompe à eau (12), le moteur d'entraînement (13), la deuxième pompe à eau (21), le refroidisseur de batterie (23) et la batterie électrique (24) sont connectés en série pour former un circuit fermé ;
le circuit de gestion thermique du véhicule électrique comprend en outre une tuyauterie de régulation de température de l'habitacle, et la tuyauterie de régulation de température de l'habitacle comprend un compresseur électrique (41), un échangeur de chaleur extérieur (42), un évaporateur (43), un séparateur gaz-liquide (44), un condenseur interne au véhicule (45) et un tube d'échange de chaleur (46) ; et
**caractérisé en ce que** le système de tube de commande de température d'habitacle comprend en outre un second système de tube de commande configuré pour permettre au système de tube de commande de température d'habitacle de commuter entre les deux états suivants :
état a, le compresseur électrique (41), l'échangeur de chaleur extérieur (42), l'évaporateur (43) et le séparateur gaz-liquide (44) sont connectés en série les uns derrière les autres pour former un circuit fermé, et le tube d'échange de chaleur (46) est connecté en parallèle à l'évaporateur (43) ; et
état b, le compresseur électrique (41), le condenseur embarqué (45), l'échangeur de chaleur extérieur (42) et le séparateur gaz-liquide (44) sont connectés successivement en série pour former un circuit fermé, et le tube d'échange de chaleur (46) est connecté en parallèle avec l'échangeur de chaleur extérieur (42) ; et
le tube d'échange de chaleur (46) s'étend à travers le refroidisseur de batterie (23) pour réaliser un échange de chaleur avec le système de tube de contrôle de température de la batterie de puissance.

2. Circuit de gestion thermique pour un véhicule électrique selon la revendication 1, **caractérisé en ce que** le premier système de tubes de commande est configuré de telle sorte que le système de tubes de refroidissement du moteur et le système de tubes de commande de la température de la batterie électrique peuvent être commutés dans l'état 4 ;
État 4 : la chaudière de détente (11), la première pompe à eau (12), le moteur d'entraînement (13), la deuxième pompe à eau (21) et le refroidisseur de batterie (23) sont reliés en série pour former un circuit fermé ;
dans lequel le premier système de lignes de commande comprend une vanne à six voies (31), et la vanne à six voies (31) comprend :
un premier raccord (1) qui est relié au refroidisseur à basse température (14) ;
un deuxième orifice (2) connecté à une extrémité d'une première ligne de dérivation (32) et une autre extrémité de la première ligne de dérivation (32) connectée à une extrémité de sortie d'eau du moteur d'entraînement (13) ;
un troisième raccord (3) qui est relié à la chaudière de détente (11) ;
une quatrième ouverture (4) reliée à une sortie d'eau de la batterie d'énergie (24) ;
une cinquième borne (5) connectée à une extrémité d'une deuxième ligne de dérivation (33), et une autre extrémité de la deuxième ligne de dérivation (33) connectée à une ligne entre le refroidisseur de batterie (23) et la batterie de puissance
(24) ; et
un sixième raccord (6) qui est relié à la deuxième pompe à eau (21) ;
dans lequel la vanne à six voies (31) est configurée pour commuter entre les stations suivantes :
Station 1, la première borne (1) est reliée à la troisième borne (3) et la quatrième borne (4) est reliée à la sixième borne (6) ;
Station 2, dans laquelle le premier port (1) est connecté au sixième port (6) et le quatrième port (4) est connecté au troisième port (3) ;
Station 3, dans laquelle la deuxième borne (2) est connectée à la sixième borne (6) et la quatrième borne (4) est connectée à la troisième borne (3) ; et
station 4, le deuxième port (2) étant relié au sixième port (6) et le cinquième port (5) étant relié au troisième port (3).

3. Circuit de gestion thermique pour véhicules électriques selon la revendication 2, **caractérisé en ce que** le premier système de tubes de commande comprend une vanne à quatre voies (34), une première vanne à trois voies (35) et une deuxième vanne à trois voies (37) ;
les quatre raccords de la vanne à quatre voies (34) sont respectivement reliés au radiateur basse température (14), à la chaudière d'expansion (11), à la batterie électrique (24) et à la deuxième pompe à eau (21) ;
deux orifices de la première vanne à trois voies (35) sont connectés en série dans la conduite entre le moteur d'entraînement (13) et le radiateur à basse température (14), le troisième orifice est connecté à une extrémité d'une troisième conduite de dérivation (36) et une autre extrémité de la troisième conduite de dérivation (36) est connectée à une conduite entre le radiateur à basse température (14) et la vanne à quatre voies (34) ; et
deux bornes de la deuxième vanne à trois voies (37) sont connectées en série dans la ligne entre le refroidisseur de batterie (23) et la batterie de puissance (24), la troisième borne est connectée à une extrémité d'une quatrième ligne de dérivation (28), et une autre extrémité de la quatrième ligne de dérivation (28) est connectée à une ligne entre la batterie de puissance (24) et la vanne à quatre voies (34).

4. Circuit de gestion thermique pour véhicules électriques selon la revendication 2 ou 3, **caractérisé en ce que** le deuxième système de tubes de commande comprend :
un système de tuyauterie principal (400) connecté successivement au compresseur électrique (41), à l'échangeur de chaleur extérieur (42), à l'évaporateur (43) et au séparateur gaz-liquide (44) afin de former un circuit fermé ;
un premier sous-système de tubes (401) connecté en parallèle à l'échangeur de chaleur extérieur (42), et le condenseur embarqué (45) connecté au premier sous-système de tubes (401) ;
un deuxième sous-système de tubes (402) connecté en parallèle à l'évaporateur (43), et le tube d'échange de chaleur (46) connecté au deuxième sous-système de tubes (402) ;
un troisième sous-système de tubes (403) raccordé entre l'échangeur de chaleur extérieur (42) et le séparateur gaz-liquide (44) ;
un premier ensemble de vanne de commande utilisé pour commander une extrémité de sortie de liquide du compresseur électrique
(41), qui est raccordé soit à l'échangeur de chaleur extérieur (42), soit au condenseur embarqué (45), et
un deuxième ensemble de vanne de commande servant à commander la connexion avec le troisième sous-système (403) ou la déconnexion de celui-ci.

5. Circuit de gestion thermique pour un véhicule électrique selon la revendication 4, **caractérisé en ce que** le premier sous-système de tubes (401) est pourvu d'une première soupape d'expansion électronique (54), et la première soupape d'expansion électronique (54) est disposée à une extrémité de sortie de liquide du condenseur interne du véhicule.
(45) ; le deuxième système de tubes secondaires (402) est muni d'une deuxième soupape de détente électronique (56), et la deuxième soupape de détente électronique (56) est disposée à une extrémité d'entrée de liquide du tube d'échangeur de chaleur (46) ; une extrémité d'entrée de liquide de l'évaporateur (43) est munie d'une troisième soupape de détente électronique (55) ; le système de tubes principal (400) est muni d'une vanne unidirectionnelle (57) et la vanne unidirectionnelle (57) est disposée sur le système de tubes principal (400) entre le premier système de tubes partiel (401) et le deuxième système de tubes partiel (402) ; un capteur de pression et de température est disposé à une sortie du condenseur embarqué (45) et/ou à une sortie de l'évaporateur (43).

6. Circuit de gestion thermique pour un véhicule électrique selon l'une quelconque des revendications 1 à 5, **caractérisé en ce que** la tuyauterie de régulation thermique de la batterie de puissance est munie d'un premier chauffage PTC (22) et le premier chauffage PTC (22) est disposé entre la deuxième pompe à eau (21) et le radiateur de batterie (23) ; l'évaporateur (43) et le condenseur interne au véhicule (45) sont tous deux disposés dans un conduit d'air d'un système de climatisation du véhicule ; et un deuxième chauffage PTC (47) est disposé dans le conduit d'air du système de climatisation du véhicule.

7. Procédé de commande pour un circuit de gestion thermique d'un véhicule électrique, **caractérisé en ce que** le circuit de gestion thermique d'un véhicule électrique comprend un système de tuyaux de refroidissement pour le moteur d'entraînement, un système de commande de température pour la batterie de puissance, un système de commande de température pour l'habitacle et un module d'inversion, qui est connecté entre le système de tuyaux de refroidissement pour le moteur d'entraînement et le système de commande de température pour la batterie de puissance, dans lequel le système de tuyaux de refroidissement pour le moteur d'entraînement comprend une chaudière à expansion (11), une première pompe à eau (12), un moteur d'entraînement (13) et un refroidisseur à basse température
(14) connectés en série ; le système de tuyauterie de régulation de température de la batterie d'alimentation comprend une deuxième pompe à eau (21), un premier réchauffeur PTC (22), un refroidisseur de batterie (23) et une batterie d'alimentation (24) connectés en série les uns aux autres, le système de tubes de régulation de température de l'habitacle comprend un compresseur électrique (41), un échangeur de chaleur extérieur (42), un évaporateur (43), un séparateur gaz-liquide (44), un condenseur interne au véhicule (45), un tube d'échange de chaleur (46) et un second chauffage PTC (47) ; le tube d'échange de chaleur (46) passe à travers le radiateur de batterie (23) pour réaliser un échange de chaleur avec le système de tubes de régulation de température de la batterie électrique ; et
la procédure de contrôle comprend :
commander le système de conduites de refroidissement du moteur d'entraînement et le système de conduites de régulation de température de la batterie de puissance, de manière à former des circuits fermés indépendants respectifs lorsque l'habitacle et la batterie de puissance ont tous deux besoin de refroidissement ; commander le compresseur électrique (41), l'échangeur de chaleur extérieur (42), l'évaporateur (43) et le séparateur gaz-liquide (44) de manière à ce qu'ils soient successivement connectés en série pour former un circuit fermé, et le tube d'échange de chaleur (46) connecté en parallèle à l'évaporateur (43) ; et commander l'arrêt du premier chauffage PTC (22) ;
commander le système de conduites de refroidissement du moteur d'entraînement et le système de régulation de température de la batterie de puissance pour former un circuit fermé en série lorsque l'habitacle a une demande de refroidissement, que la demande de refroidissement de la batterie de puissance n'est pas élevée et que la température de l'eau de sortie du circuit du moteur d'entraînement est inférieure à la température de l'eau de la batterie de puissance ; commander le compresseur électrique (41), l'échangeur de chaleur extérieur (42), l'évaporateur (43) et le séparateur gaz-liquide (44) en série pour former une boucle fermée, et commander le tube d'échange de chaleur (46) pour qu'il soit séparé du système de tubes de régulation de température dans l'habitacle ; et commander le premier dispositif de chauffage PTC (22) pour qu'il s'éteigne ;
commander le réservoir d'expansion (11), la première pompe à eau (12), le moteur d'entraînement (13), la deuxième pompe à eau (21), le refroidisseur de batterie (23) et la batterie de puissance (24) pour former une boucle fermée en série lorsque la batterie de puissance (24) a une faible demande de chauffage de charge et que la température de l'eau de sortie du moteur d'entraînement (13) est supérieure à celle de la boucle de moteur de puissance ; commander le tube d'échange de chaleur (46), qui est séparé du système de tubes de commande de la température de l'habitacle ; et commander le premier chauffage PTC (22) pour l'arrêter ;
commander le système de conduites de refroidissement du moteur de propulsion et le système de conduites de régulation de température de la batterie de puissance pour former respectivement des circuits fermés indépendants lorsque l'habitacle et la batterie de puissance (24) ont tous deux besoin d'être chauffés ; commander pour mettre en marche le premier chauffage PTC (22) ; commander le compresseur électrique (41), le condenseur embarqué (45), l'échangeur de chaleur extérieur (42) et le séparateur gaz-liquide (44) pour qu'ils soient connectés en série les uns après les autres afin de former un circuit fermé ; et commander le tube d'échange de chaleur (46) séparé du système de tubes de régulation de température de l'habitacle ; et
commander le réservoir d'expansion (11), la première pompe à eau (12), le moteur d'entraînement (13), la deuxième pompe à eau (21) et le refroidisseur de batterie (23), qui sont connectés successivement en série pour former un circuit fermé lorsque seul l'habitacle a besoin de chauffage ; commander le compresseur électrique (41), le condenseur interne au véhicule (45), l'échangeur de chaleur extérieur (42) et le séparateur gaz-liquide (44) de manière à ce qu'ils soient connectés en série pour former un circuit fermé ; et commander le tube d'échange de chaleur (46) connecté en parallèle avec l'échangeur de chaleur extérieur (42).

8. Un véhicule purement électrique qui
comprend : un habitacle ;
un système d'alimentation électrique ; et
un circuit de gestion de la chaleur, le circuit de gestion de la chaleur comprenant
un premier système de tuyauterie (10') comprenant une chaudière à expansion (11'), une première pompe à eau (12'), un moteur d'entraînement (13') et un radiateur à basse température (14'), qui sont connectés en série ;
un deuxième système de conduites (20') comprenant une deuxième pompe à eau (21'), une batterie d'énergie (22') et un refroidisseur de batterie (23'), qui sont connectés en série ;
un premier module d'inversion connecté entre le premier système de tuyauterie (10') et le deuxième système de tuyauterie (20'), le premier module d'inversion étant configuré de telle sorte que le premier système de tuyauterie (10') et le deuxième système de tuyauterie (20') puissent alterner entre les quatre stations suivantes :
Station 1, dans laquelle le premier système de tuyaux (10') et le deuxième système de tuyaux (20') forment chacun des circuits fermés indépendants ;
station 2, la chaudière de détente (11'), la première pompe à eau (12'), le moteur d'entraînement (13'), le refroidisseur basse température (14') et la batterie électrique (22') sont connectés en série et forment un circuit fermé ;
station 3, la chaudière d'expansion (11'), la première pompe à eau (12'), le moteur d'entraînement (13'), et la batterie de puissance (22') sont connectés en série pour former un circuit fermé ;
station 4, la chaudière d'expansion (1 1'), la première pompe à eau (12'), le moteur d'entraînement (13') et le refroidisseur de batterie (23') sont connectés en série afin de former un circuit fermé ;
dans lequel le refroidisseur de batterie (23') comprend un premier canal d'écoulement (231') et un deuxième canal d'écoulement (232'), le premier canal d'écoulement (231') et le deuxième canal d'écoulement (232') étant indépendants l'un de l'autre et pouvant effectuer un échange de chaleur entre eux, le premier canal d'écoulement (23 1') étant connecté en série au deuxième système de tuyauterie, le premier canal d'écoulement (231') est connecté en série avec le deuxième système de tuyaux et le deuxième canal d'écoulement (232') est connecté à une conduite à basse température d'un système de climatisation de véhicule, **caractérisé en ce que** le premier module de commutation est conçu de telle sorte que le premier système de tuyaux (10') et le deuxième système de tuyaux (20') peuvent être commutés sur la station 5, et la station 5 est celle : la chaudière d'expansion (11'), la première pompe à eau (12') et le moteur d'entraînement (13') forment indépendamment un circuit fermé ; et la deuxième pompe à eau (21') et la batterie d'énergie (22') forment indépendamment un circuit fermé.

9. Véhicule purement électrique selon la revendication 8, **caractérisé en ce que** le circuit de gestion thermique du véhicule électrique comprend en outre un troisième système de tuyauterie (30'), et le troisième système de tuyauterie (30') comprend une troisième pompe à eau (31'), un réchauffeur PTC (32') et un noyau chauffant (33') connectés en série, le noyau chauffant (33') étant disposé dans un conduit d'air d'un système de climatisation du véhicule, et le noyau chauffant (33') étant connecté en parallèle aux deux extrémités de la batterie de puissance (22') ; le troisième système de tuyaux (30') est pourvu d'un deuxième module d'inversion, et le deuxième module d'inversion est configuré de manière à permettre au troisième système de tuyaux (30') de passer d'une des trois stations suivantes :
station a, la troisième pompe à eau (3 1'), le réchauffeur PTC (32') et le noyau chauffant (33') sont connectés en série pour former un circuit fermé ;
station b, la troisième pompe à eau (3 1'), le chauffage PTC (32') et la batterie électrique (22') sont connectés en série pour former un circuit fermé ;
station c, la troisième pompe à eau (3 1'), le chauffage PTC (32') et le noyau chauffant (33') sont connectés en série pour former un circuit fermé, tandis que la troisième pompe à eau (3 1'), le chauffage PTC (32') et la batterie électrique (22') sont connectés en série pour former un circuit fermé.

10. Véhicule électrique pur selon la revendication 9, **caractérisé en ce que** le troisième système de tubes (30') est connecté en série avec un condenseur refroidi par eau (34'), le condenseur refroidi par eau (34') comprend un canal d'écoulement a (341') et un canal d'écoulement b (342'), le canal d'écoulement a (341') et le canal d'écoulement b (342') sont indépendants l'un de l'autre et peuvent effectuer un échange de chaleur entre eux, le canal d'écoulement a (341') est connecté en série avec le troisième système de tubes (30'),
et le canal d'écoulement b (342') est connecté à une conduite à haute température du climatiseur de véhicule ; le climatiseur de véhicule comprend un compresseur électrique (41'), un échangeur de chaleur extérieur (42'), un évaporateur (43') et un séparateur gaz-liquide (44') qui sont connectés les uns aux autres ; le climatiseur de véhicule comprend en outre un troisième module de commutation configuré pour permettre au climatiseur de véhicule de commuter entre les deux stations suivantes :
station I, le compresseur électrique (41'), l'échangeur de chaleur extérieur (42'), l'évaporateur (43') et le séparateur gaz-liquide (44') sont connectés en série pour former un circuit fermé, et le deuxième canal d'écoulement (232') est connecté en parallèle à l'évaporateur (43') ;
Station II, le compresseur électrique (41'), le canal d'écoulement b (342'), l'échangeur de chaleur extérieur (42') et le séparateur gaz-liquide (44') sont connectés en série pour former un circuit fermé, et le deuxième canal d'écoulement (232') est connecté en parallèle à l'échangeur de chaleur extérieur (42') ; et
l'évaporateur (43') se trouve dans le conduit d'air du système de climatisation du véhicule.

11. Véhicule électrique pur selon la revendication 8 ou 10, **caractérisé en ce que** le compresseur électrique (41'), l'échangeur de chaleur extérieur (42'), l'évaporateur (43') et le séparateur gaz-liquide (44') sont connectés en série dans un système de tuyaux principal (40'), et le système de tuyaux principal (40') est un circuit fermé ; une extrémité du canal d'écoulement b (342') est reliée à un système de tuyauterie principal (40') entre le compresseur électrique (41') et l'échangeur de chaleur extérieur (42'), et une autre extrémité du canal d'écoulement b (342') est reliée au système de tuyauterie principal (40') entre l'échangeur de chaleur extérieur (42') et l'évaporateur (43') ; et les deux extrémités du deuxième canal d'écoulement (232') sont reliées respectivement aux deux extrémités de l'évaporateur (43') ; le troisième module d'inversion comprend : une première vanne d'arrêt (401') dans le système de tuyauterie principal (40') entre le système de tuyauterie électrique (40') et le système de tuyauterie secondaire (40'). compresseur (41') et l'échangeur de chaleur extérieur (42') ;
une deuxième vanne d'arrêt (402') située dans le canal d'écoulement b (342') ;
un embranchement de retour (404'), une extrémité de l'embranchement de retour étant reliée au système de tuyauterie principal (40') entre la première vanne d'arrêt (401') et l'échangeur de chaleur extérieur (42'), et l'autre extrémité étant reliée au séparateur gaz-liquide (44') ; et
une troisième vanne d'arrêt (403') située dans la conduite de retour (404').

12. Véhicule purement électrique selon la revendication 11, **caractérisé en ce que** le système de conditionnement d'air du véhicule comprend en outre une première soupape de détente électronique (405') située sur une conduite menant du canal d'écoulement b (342') à l'échangeur de chaleur extérieur (42') dans la station II ;
les deux extrémités de la première soupape d'expansion électronique (405') sont reliées en parallèle à une première soupape unidirectionnelle (408') ;
une deuxième vanne unidirectionnelle (409') est raccordée en série à la conduite de retour (404') ;
une deuxième soupape d'expansion électronique (406') est connectée en série avec le deuxième canal d'écoulement (232') ;
le système de climatisation de véhicule comprend également une troisième soupape de détente électronique (407'), et la troisième soupape de détente électronique (407') est située sur une conduite menant de l'échangeur de chaleur extérieur (42') à l'évaporateur (43') dans l'état de la station I.

13. Véhicule électrique pur selon l'une des revendications 7 à 12, **caractérisé en ce que** le premier module d'inversion comprend une vanne à six voies (101'), une première ligne de dérivation (102') et une deuxième ligne de dérivation (103') ;
une extrémité de la première ligne de dérivation (102') est reliée à la ligne entre le moteur d'entraînement (13') et le radiateur basse température (14'), et une autre extrémité est reliée à la vanne à six voies (101') ;
une extrémité de la seconde ligne de dérivation (103') est connectée à la ligne entre la batterie de puissance (22') et le refroidisseur de batterie (23'), et une autre extrémité est connectée à la vanne à six voies (101') ;
la vanne à six voies (101') comprend:
une première connexion (1') reliée au refroidisseur de batterie (23') ;
un deuxième raccord (2') relié au deuxième tuyau de dérivation (103') ;
un troisième raccord (3') relié à la deuxième pompe à eau (21') ;
une quatrième ouverture (4') reliée à la chaudière de détente (1 1') ;
une cinquième ouverture (5') reliée à la première conduite de dérivation (102') ;
un sixième orifice (6') relié au radiateur basse température (14') ; la vanne à six voies (101') est configurée comme suit :
le premier port (1') peut être connecté au troisième port (3') ou au quatrième port (4') ou déconnecté de ceux-ci ;
le deuxième port (2') peut être connecté au troisième port (3') ou au quatrième port (4') ou en être déconnecté ;
la cinquième borne (5') peut être connectée à la troisième borne (3') ou à la quatrième borne (4') ou en être déconnectée ; et
le sixième port (6') peut être connecté au troisième port (3') ou au quatrième port (4') ou déconnecté de ceux-ci.
